(19) Europäisches Patentamt / European Patent Office / Office européen des brevets

(11) **EP 2 370 793 B1**

(12) **EUROPÄISCHE PATENTSCHRIFT**

(45) Veröffentlichungstag und Bekanntmachung des Hinweises auf die Patenterteilung:
**03.04.2019  Patentblatt 2019/14**

(21) Anmeldenummer: **09774892.5**

(22) Anmeldetag: **11.12.2009**

(51) Int Cl.:
**G01F 1/66** $^{(2006.01)}$

(86) Internationale Anmeldenummer:
**PCT/EP2009/066912**

(87) Internationale Veröffentlichungsnummer:
**WO 2010/076151 (08.07.2010 Gazette 2010/27)**

(54) **MESSSYSTEM ZUR BESTIMMUNG UND/ODER ÜBERWACHUNG DES DURCHFLUSSES EINES MESSMEDIUMS DURCH DAS MESSROHR MITTELS ULTRASCHALL**

MEASURING SYSTEM FOR DETERMINING AND/OR MONITORING THE FLOW RATE OF A MEASURED MEDIUM THROUGH THE MEASURING TUBE USING ULTRASOUND

SYSTÈME DE MESURE POUR DÉTERMINER ET/OU SURVEILLER PAR ULTRASONS LE DÉBIT D'UN MILIEU DE MESURE DANS LE TUBE DE MESURE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.12.2008  DE 102008055164**

(43) Veröffentlichungstag der Anmeldung:
**05.10.2011  Patentblatt 2011/40**

(73) Patentinhaber: **Endress+Hauser Flowtec AG**
**4153 Reinach (CH)**

(72) Erfinder:
• **KUMAR, Vivek**
  **CH-4132 Muttenz (CH)**
• **WIEST, Achim**
  **79576 Weil am Rhein (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-B1- 0 804 717     JP-A- 2007 121 071**
**US-A- 5 179 862     US-A- 5 717 145**
**US-A- 5 908 992**

**Beschreibung**

Die vorliegende Erfindung betrifft ein Messsystem und ein Verfahren zur Bestimmung und/oder Überwachung des Durchflusses eines Messmediums durch das Messrohr mittels Ultraschall, wobei das Messrohr einen Messrohreinlauf und einen Messrohrauslauf aufweist, welcher Messrohreinlauf eine Messrohreinlaufachse aufweist, welche Messrohreinlaufachse einen Winkel $\alpha$ ungleich 90° zur Messrohrachse aufweist und welcher Messrohrauslauf eine Messrohrauslaufachse aufweist, welche Messrohrauslaufachse einen Winkel $\beta$ ungleich 90° zur Messrohrachse aufweist, und wobei das Messsystem mindestens zwei elektromechanische Wandlerelemente aufweist, welche sich im Wesentlichen planparallel gegenüberstehen und jeweils mit dem Messrohr akustisch koppelbar sind.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet.

Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Derartige Systeme sind z. B. aus der EP 686 255 B1, US-A 44 84 478 oder US-A 45 98 593 bekannt.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen ermittelt.

Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem piezoelektrischen Element, auch kurz Piezo genannt, und einer Koppelschicht, auch Koppelkeil oder seltener Vorlaufkörper genannt. Die Koppelschicht ist dabei meist aus Kunststoff gefertigt, das piezoelektrische Element besteht in der industriellen Prozessmesstechnik üblicherweise aus einer Piezokeramik. Im piezoelektrischen Element werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

In der US 5,179,862 wird ein Ultraschallmesssystem gemäß dem Oberbegriff des unabhängigen Anspruchs 1 offenbart, wobei in eine feste Vorrichtung ein flexibles Messrohr, ein Schlauch, einziehbar ist. Der feste Teil des Messsystems beherbergt die Ultraschallwandler. Verläuft ein Ultraschallsignal axial durch das Messrohr, wird das Messrohr an zwei sich gegenüberliegenden Stellen gebogen. Zwischen den Biegungen befindet sich also die eigentliche Messstrecke des Messrohrs, die Biegungen könnten als Messrohreinlauf und Messrohrauslauf mit gleichem Durchmesser wie das Messrohr aufgefasst werden. Die Koppelelemente der Ultraschallwandler koppeln an den Biegungen die Ultraschallsignale in das Messrohr ein bzw. aus dem Messrohr aus. Dazu weisen die Koppelelemente entsprechende Ein- und/oder Auskoppelflächen auf, welche jeweils einen Winkel zu den piezoelektrischen Elementen aufweisen, welche ihrerseits planparallel zueinander und senkrecht auf der Messrohrachse angeordnet sind. Die schallaussendenden bzw. schallempfangenden Flächen der piezoelektrischen Elemente betragen mindestens die Größe des Durchmessers des Messrohrs. Nachteilig an Winkeln zwischen den schallaussendenden bzw. schallempfangenden Flächen der piezoelektrischen Elemente und den Ein- bzw. Auskoppelflächen der Koppelelemente ist, dass die Schallgeschwindigkeiten in den Koppelelementen und dem Messrohr und/oder im Messmedium aufeinander und mit den Winkeln abgestimmt sein müssen, um einen zur Messrohrsachse parallelen Signalpfad des Ultraschallsignals zu erhalten.

Weitere Beispiele von Ultraschall-Durchflussmesssystemen mit axial an den Enden eines Messrohrs anbringbaren Ultraschallwandlern zeigen die US 5,463,906 und die US 5,717,145. Auch werden piezoelektrische Elemente eingesetzt mit schallaussendenden bzw. schallempfangenden Flächen, welche mindestens der Größe des Durchmessers des Messrohrs entsprechen, um den gesamten Messrohrquerschnitt messtechnisch zu erfassen.

Auch die EP 1 760 436 A2 zeigt ein Ultraschall-Durchflussmesssystem mit einem Messrohr, welches axial mittels Ultraschall durchschallt wird, mit piezoelektrischen Elementen, welche einen Durchmesser der schallaussendenden bzw. schallempfangenden Flächen aufweisen, der mindestens gleich groß dem Durchmesser des Messrohrs ist.

Hingegen ist in der US 2007/0227263 A1 ein Ultraschall-Durchflussmesssystem mit einem Messrohr beschrieben, welches vier Öffnungen aufweist. Zwei Öffnungen sind vorgesehen zum Anschluss an den Prozess. Diese Öffnungen bilden jeweils einen Messrohreinlauf, respektive einen Messrohrauslauf, welche senkrecht auf der Messrohrachse stehen. Sowohl der Messrohreinlauf, als auch der Messrohrauslauf sind auf der gleichen Seite des Messrohrs angebracht. In die beiden anderen Öffnungen des Messrohrs werden die Ultraschallwandler eingefügt. Die Koppelelemente der Ultraschallwandler verschließen das Messrohr axial. Die Ultraschallwandler stehen sich im Wesentlichen planparallel und in einem Winkel von 90° zur Messrohrachse gegenüber. Die Ein- und/oder Auskoppelflächen der Koppelelemente der Ultraschallwandler, zur Ein- bzw. Auskopplung der Ultraschallsignale in das Messmedium, sind konvex, unmittelbar vor den Ein- und/oder Auskoppelflächen, also im Bereich der Ein- bzw. Auskopplung der Ultraschallsignale in das bzw. aus dem Messmedium, weist das Messrohr einen vergrößerten Querschnitt auf. Die Durchmesser der im Wesentlichen scheibenförmigen Ultraschallwandler sind größer als der Durchmesser einer wesentlichen Messstrecke des Messrohrs. Durch die Querschnittsänderung des Messrohrs vor den Ein- und/oder Auskoppelflächen entstehen eben vor den Ein- und/oder Auskoppelflächen Kammern, wo sich das Messmedium sammeln kann. Da die Durchmesser der Messrohrein- bzw. Messrohrausläufe und der Messstrecke des Messrohrs selbst im Wesentlichen gleich sind, wird die Strömung des Messmediums vor den Ein- und/oder Auskoppelflächen verlangsamt und im Messrohr, in einem wesentlichen Teil der Messstrecke, beschleunigt.

Auch die WO 2008/101662 A2 verfügt über einen ähnlichen Aufbau der Messzelle. Zwar sind hier die Durchmesser der Messrohrein- bzw. Messrohrausläufe und des Messrohrs selbst im Wesentlichen gleich und die Messrohrein- bzw. Messrohrausläufe stehen in einem Winkel kleiner 90° auf der Messrohrachse, jedoch wird auch hier die Strömung des Messmediums vor den Ein- und/oder Auskoppelflächen, welche auch hier wiederum durch die in die Messzelle eingesetzten Koppelelemente der Ultraschallwandler geformt werden und in einem Winkel von 90° zur Messrohrachse angeordnet sind, verlangsamt. Hier werden ebenfalls Kammern vor den Ein- und Auskoppelflächen gebildet. Die schallaussendenden bzw. schallempfangenden Flächen der piezoelektrischen Elemente sind größer als der Durchmesser des Messrohrs, allerdings verschließt die Schallein- bzw. Schallauskoppelfläche des Koppelelements axial das Messrohr und ist daher von gleicher Größe.

Der Erfindung liegt die Aufgabe zugrunde, ein hochgenaues Messsystem mit kostengünstig auswechselbaren Messrohren bereit zu stellen.

Die Aufgabe wird gelöst durch ein Messsystem zur Bestimmung und/oder Überwachung des Durchflusses eines Messmediums durch ein Messrohr mit einem ersten, im Wesentlichen scheibenförmigen elektromechanischen Wandlerelement und zumindest einem weiteren, im Wesentlichen scheibenförmigen, zweiten elektromechanischen Wandlerelement und mit einem Messrohr mit einer Messrohrachse und mit einem Messrohreinlauf und einem Messrohrauslauf, welcher Messrohreinlauf eine Messrohreinlaufachse aufweist, welche Messrohreinlaufachse einen Winkel $\alpha$ ungleich 90° zur Messrohrachse aufweist und welcher Messrohrauslauf eine Messrohrauslaufachse aufweist, welche Messrohrauslaufachse einen Winkel $\beta$ ungleich 90° zur Messrohrachse aufweist, wobei sich die elektromechanischen Wandlerelemente im Wesentlichen planparallel gegenüberstehen, wobei eine Verbindungslinie zwischen den Mittelpunkten des ersten und zweiten elektromechanischen Wandlerelements in einem Winkel $\gamma$ zur Messrohrachse steht und auf der Seite der Messrohrachse verläuft, auf welcher sich der Messrohrauslauf befindet, wobei ein Messpfad des Messsystems entlang der Verbindungslinie verläuft.

Bevorzugt arbeitet das Messsystem nach dem Laufzeitdifferenz-Prinzip. Die elektromechanischen Wandlerelemente befinden sich einer ersten Ausgestaltung gemäß im Bereich des Messrohrein- und -auslaufs.

Das elektromechanische Wandlerelement wandelt die Ultraschallsignale nach dem Prinzip der Elektrostriktion oder der Magnetostriktion. Unter der Magnetostriktion wird die Längenänderung eines ferromagnetischen Stoffs infolge eines angelegten Magnetfelds verstanden. Die Elektrostriktion hingegen beschreibt die Deformation eines Dielektrikums infolge eines angelegten elektrischen Felds. Die Deformation ist dabei im Allgemeinen nicht abhängig von der Richtung des Felds. Der Piezoeffekt ist somit im Speziellen Teil der Elektrostriktion. In einer Ausgestaltung ist das elektromechanische Wandlerelement ein piezoelektrisches Element.

Das elektromechanische Wandlerelement erzeugt Ultraschallsignale und/oder wandelt empfangene Ultraschallsignale wiederum in elektrische Signale um und ist somit wesentlicher Bestandteil eines Ultraschallwandlers. Ultraschallwandler mit zumindest einem elektromechanischen Wandlerelement erzeugen Ultraschallsignale in Form von Ultraschallwellen. In Flüssigkeiten breiten sich Ultraschallwellen nur als Longitudinalwellen aus. Die angeregten Teilchen schwingen hierbei in Ausbreitungsrichtung um den Betrag der Amplitude. Ein Ultraschallsignal besteht somit aus mindestens einer Ultraschallwelle mit einer Wellenfront. Die Wellenfront steht dabei senkrecht zur Ausbreitungsrichtung der Ultraschallwellen.

Ein Ultraschallsignal ist in seiner Breite begrenzt. D.h. die Wellenfront hat eine endliche Ausdehnung. Das wesentliche Element zur Begrenzung der Breite eines Ultraschallsignals, ist die Fläche des Ultraschallwandlers, vom welchem die Ultraschallwelle ausgesendet wird. Der Einfachheit halber wird davon ausgegangen, dass sich ein Ultraschallsignal einer begrenzten Breite auf einem scharfen Schall- oder Signalpfad ausbreitet. Die Breite des Signalpfads ist dabei als punktförmig zu betrachten. Modellhaft breitet sich ein Ultraschallsignal also auf einem geraden Signalpfad aus. Die Ausbreitungsrichtung der Ultraschallwellen entspricht somit der Richtung des Ultraschallsignals auf dem Signalpfad. Ein Signalpfad zur Bestimmung und/oder Überwachung des Durchflusses eines Messmediums durch ein Messrohr wird gelegentlich auch als Messpfad bezeichnet.

Die Fläche eines elektromechanischen Wandlerelements, von weicher die Ultraschallsignale bzw. die Ultraschallwellen abgestrahlt werden und/oder welche Ultraschallsignale bzw. Ultraschallwellen empfängt und diese in elektrische Signale wandelt, ist die so genannte aktive Fläche oder die schallaussendende und/oder schallempfangende Fläche des elektromechanischen Wandlerelements. Alle schallaussendenden und/oder schallempfangenden Flächen eines Ultraschallwandlers zusammengenommen bilden somit die schallaussendende und/oder schallempfangende Fläche des Ultraschallwandlers.

Die elektromechanischen Wandlerelemente sind scheibenförmig ausgebildet, d.h. die größte Ausdehnung der schallaussendenden und/oder schallempfangenden Fläche eines elektromechanischen Wandlerelements ist größer als die Dicke des elektromechanischen Wandlerelements. Die schallaussendende und/oder schallempfangende Fläche des elektromechanischen Wandlerelements kann dabei unterschiedliche Formen annehmen.

Besitzen die scheibenförmigen elektromechanischen Wandlerelemente einen näherungsweise kreisrunden Querschnitt, so ist der Mittelpunkt der dann näherungsweise kreisrunden Scheibe gleich dem Schwerpunkt der Ultraschallwellen abstrahlenden und/oder empfangenden Fläche des Wandlerelements. Ist die Form eines elektromechanischen Wandlerelements ungleich kreisförmig, z.B. oval, viereckig, sechseckig, achteckig oder mehreckig, ist der Mittelpunkt insbesondere der Schwerpunkt der Ultraschallwellen abstrahlenden und/oder empfangenden Fläche des elektromechanischen Wandlerelements.

Als Ausdehnung einer Fläche wird die Verbindungslinie zweier nicht benachbarter Punkte des Flächenrands durch den Mittelpunkt der Fläche bezeichnet. Die größte Ausdehnung ist entsprechend die längste Verbindung zwischen zwei Punkten des Flächenrands, welche den Mittelpunkt der Fläche schneidet. Bei einer Ellipse wirkt die Hauptachse, also die Verbindung zwischen den Hauptscheiteln, den Punkten der Ellipse mit dem größten Abstand zum Mittelpunkt, als größte Ausdehnung. Bei Vielecken mit mindestens vier Ecken ist die längste Diagonale die größte Ausdehnung. Ist das Wandlerelement nun hingegen kreisförmig, also weist es einen kreisförmigen Querschnitt der schallaussendenden und/oder schallempfangenden Fläche auf, so sind alle Durchmesser näherungsweise gleich.

Stehen sich die elektromechanischen Wandlerelemente planparallel gegenüber, so sind die schallaussendende und/oder empfangende Fläche des ersten Wandlerelements und die schallaussendende und/oder empfangende Fläche des zweiten Wandlerelements parallel zueinander. Erfindungsgemäß ist die schallaussendende und/oder empfangende Fläche des ersten elektromechanischen Wandlerelements nicht nur parallel zur schallaussendenden und/oder empfangenden Fläche des zweiten elektromechanischen Wandlerelements, sondern steht dieser direkt gegenüber, d.h. die Verbindungslinie zwischen den Mittelpunkten steht senkrecht auf den jeweiligen schallaussendenden und/oder empfangenden Flächen der elektromechanischen Wandlerelemente, Weisen beide Flächen den gleichen Querschnitt auf und sind sie nicht zueinander verdreht, würden sie bei einer Verschiebung entlang der Verbindungslinie zur vollständigen gegenseitigen Deckung gelangen.

Sowohl die Messrohrachse, als auch die Messrohreinlauf- und Messrohrauslaufachse gilt als gerade Verbindungslinie zwischen mindestens zwei Mittelpunkten des Messrohrs, respektive des Messrohreinlaufs bzw. des Messrohrauslaufs. Genannte Achsen sind bezogen auf die jeweiligen Innendurchmesser, d.h. egal ob ein kreisrunder oder eckiger Querschnitt des Messrohrs, respektive des Messrohreinlaufs bzw. des Messrohrauslaufs vorliegt, die zur Bildung der Achsen notwendigen und hinreichenden Mittelpunkte gelten, gleichermaßen wie bei der Bestimmung der Mittelpunkte der elektromechanischen Wandlerelemente, als Schwerpunkte von bestimmten freien Querschnittsflächen des Messrohrs, respektive des Messrohreinlaufs bzw. des Messrohrauslaufs. Da sich der Querschnitt und damit der Innendurchmesser des Messrohrs und/oder des Messrohreinlaufs und/oder des Messrohrauslaufs über die jeweilige Länge des Messrohrs und/oder des Messrohreinlaufs und/oder des Messrohrauslaufs sowohl in seiner Abmessung als auch in seiner Form ändern kann, sind mindestens zwei bestimmte Querschnitte zur Bestimmung der Achsen erforderlich. In einer Ausgestaltung mit konstanten freien Querschnittsflächen der Rohrabschnitte, verlaufen die Achsen durch alle Mittelpunkte aller Querschnitte. Insbesondere werden die Querschnittsflächen am Anfang und am Ende des Messrohrs und/oder des Messrohreinlaufs und/oder des Messrohrauslaufs zur Bestimmung der Achsen herangezogen.

Ultraschallwandler weisen neben mindestens einem elektromechanischen Wandlerelement üblicherweise eine so genannte Koppelschicht oder ein so genanntes Koppelelement auf. Die Koppelschicht leitet die Ultraschallsignale vom elektromechanischen Wandlerelement zum Messmedium und koppelt sie jeweils in das ein oder andere ein und/oder aus. Die Koppelschicht besteht dabei bevorzugt aus einem Material, welches bestimmte akustische Eigenschaften, wie z.B. eine vorgebbare akustische Impedanz und/oder eine vorgebbare Schallgeschwindigkeit, aufweist. In einer besonderen Ausführungsform dient das Messrohr selbst als Koppelschicht. Wird z.B. ein Stahlrohr als Messrohr verwendet und das elektromechanische Wandlerelement ist ein piezoelektrisches Element, so ist eine Koppelschicht als Anpassungsschicht zwischen Wandlerelement und Messrohr vorsehbar. Ist jedoch das Messrohr aus Kunststoff, insbesondere aus einem Polymer, und/oder ist das Wandlerelement ein elektrostriktives Element, so ist das elektromechanische Wandlerelement direkt auf dem Messrohr anbringbar. Das Messrohr übernimmt in diesem Fall die Aufgabe der Koppelschicht, die akustische Kopplung zwischen Wandlerelement und Messmedium.

Somit weist das Messsystem erfindungsgemäß mindestens zwei elektromechanische Wandlerelemente, z.B. piezoelektrische Elemente, auf, welche Ultraschallsignale auf zumindest einem ersten Signalpfad aussenden und/oder empfangen und jeweils eine Koppelschicht im Bereich zwischen einem elektromechanischem Wandlerelement und dem Messmedium leitet die Ultraschallsignale auf dem ersten Signalpfad. Statt einem elektromechanischen Wandlerelement können auch mehrere Wandlerelemente Verwendung finden. Diese sind z.B. nebeneinander und/oder übereinander in so genannten Stacks anzuordnen. Bei den Stacks sind die einzelnen Elemente in Serie (Reihe) oder in Sandwichbauweise kontaktiert und geschaltet.

In einer Weiterbildung der erfindungsgemäßen Lösung beträgt der Winkel γ näherungsweise 0° bzw. 180°, d.h. die Verbindungslinie und die Messrohrachse sind parallel zueinander. In einer anderen Ausgestaltung ist der Winkel γ ungleich 0° bzw. 180°, d.h. Verbindungslinie und Messrohrachse sind zueinander geneigt, wobei die Verbindungslinie die Messrohrachse nicht schneidet. In anderen Ausgestaltungen ist der Winkel γ näherungsweise 1 "oder 2° oder 5° oder 8° oder 10° oder 12° oder 15°. Insbesondere ist der Winkel γ kleiner 35°.

Die Messrohrachse und die Messrohrauslaufachse spannen eine erste gedachte Ebene auf. Eine zweite gedachte Ebene ist dann senkrecht zur ersten gedachten Ebene und schneidet die erste gedachte Ebene in einer ersten Schnittgeraden. Diese erste Schnittgerade ist in einer Ausgestaltung die Messrohrachse selbst. Dann schneidet die Verbindungslinie die zweite gedachte Ebene nicht.

Gemäß einer weiteren Weiterbildung der Erfindung beträgt zumindest die größte Ausdehnung des scheibenförmigen, ersten elektromechanischen Wandlerelements höchstens die Hälfte, insbesondere höchstens ein Drittel, des Innendurchmessers des Messrohrs.

Die jeweils größte Ausdehnung wird gemessen durch den Mittelpunkt des jeweiligen elektromechanischen Wandlerelements. Ist das Wandlerelement kreisförmig, also weist es einen kreisförmigen Querschnitt auf, so sind alle Durchmesser näherungsweise gleich und betragen eben höchstens die Hälfte, insbesondere maximal ein Drittel, des Innendurchmessers des Messrohrs.

In einer Messsystemausgestaltung liegt zumindest der Mittelpunkt des ersten elektromechanischen Wandlerelements auf der Seite einer gedachten Drittelebene, auf welcher auch der Messrohrauslauf liegt, wobei die Drittelebene parallel zur zweiten gedachten Ebene verläuft und welche Drittelebene einen Durchmesser des Messrohrs bei einem Drittel des Gesamtlänge senkrecht schneidet. In einer weiteren Ausgestaltung liegt die Verbindungslinie zwischen den Mittelpunkten des ersten und zweiten elektromechanischen Wandlerelements in dieser Drittelebene oder schneidet diese in nur einem Punkt.

Ist das Wandlerelement beispielsweise kreisförmig, also weist es eine kreisförmige schallaussendenden und/oder schallempfangenden Fläche auf, so sind alle Durchmesser näherungsweise gleich und betragen eben höchstens die Hälfte des Innendurchmessers eines ebenfalls näherungsweise kreisrunden bzw. zylindrischen Messrohrs. Einer Ausgestaltung zufolge beträgt die größte Ausdehnung höchstens ein Drittel des Innendurchmessers des Messrohrs.

Weist das Messrohr einen anderen Querschnitt auf als näherungsweise kreisrund, ist es z.B. ein Vierkantrohr oder ist der Querschnitt des vom Messmedium durchströmbaren inneren Bereichs des Messrohrs beispielsweise elliptisch, so wird statt des Innendurchmessers ebenfalls die größte Ausdehnung des Querschnitts des Messrohrs herangezogen, d.h. also, dass die größte Ausdehnung des scheibenförmigen, ersten elektromechanischen Wandlerelements höchstens die Hälfte der größten Ausdehnung des Messrohrquerschnitts beträgt, insbesondere höchstens ein Drittel. Der Querschnitt des Messrohrs steht dabei senkrecht auf der Messrohrachse.

Ultraschallwandler mit einer im Verhältnis zur freien Querschnittsfläche des Messrohrs relativ kleinen schallaussendenden und/oder schallempfangenden Fläche, führen ein Ultraschallsignal modellhaft entlang einer scharfen Geraden. Relativ zu dem Innendurchmesser des Messrohrs kleine Ultraschallwandler stören das Strömungsprofil des Messmediums im Messrohr kaum, wenn sie in das Messrohr hineinragen. Sie sind dann zwar nicht in der Lage, den gesamten freien Messrohrquerschnitt zu erfassen, sie sind aber an einer bestimmten Stelle im Messrohr gezielt platzierbar, z.B. in einer beschleunigten Strömung.

Eine Weiterbildung der erfindungsgemäßen Lösung besteht darin, dass die Messrohrachse, die Messrohreinlaufachse und die Messrohrauslaufachse im Wesentlichen in einer Raumebene liegen. Alle drei Achsen liegen in der ersten gedachten Ebene. Einer Ausgestaltung der Erfindung gemäß, liegt auch die Verbindungslinie zwischen den Mittelpunkten der elektromechanischen Wandlerelemente in der ersten gedachten Ebene.

Eine weitere Weiterbildung des erfindungsgemäßen Messsystems ist darin zu sehen, dass der Messrohreinlauf und der Messrohrauslauf auf sich gegenüberliegenden Seiten des Messrohrs angeordnet sind. Der Messrohreinlauf und der Messrohrauslauf befinden sich also auf unterschiedlichen Seiten der gedachten zweiten Ebene.

Eine Weiterbildung des erfindungsgemäßen Messsystems sieht vor, dass der Winkel $\alpha$ näherungsweise 45° beträgt. In einer weiteren Ausgestaltung beträgt der Winkel $\alpha$ erfindungsgemäß näherungsweise 45° und/oder der Winkel $\beta$ beträgt erfindungsgemäß näherungsweise 45°. In einer anderen Ausgestaltung liegen die Winkel $\alpha$ und $\beta$ jeweils zwischen 30 und 60°.

Gemäß einer weiteren Weiterbildung der erfindungsgemäßen Lösung weist der Messrohreinlauf und/oder der Messrohrauslauf einen näherungsweise gleichen Querschnitt wie das Messrohr auf, d.h. also der Innendurchmesser des Messrohreinlaufs und/oder des Messrohrauslaufs und/oder des Messrohrs sind bei einem näherungsweise kreisrunden Messrohreinlauf und/oder Messrohrauslauf und/oder Messrohr näherungsweise konstant.

Gemäß einer weiteren Weiterbildung des erfindungsgemäßen Messsystems sind im Messrohr querschnittsverengende Ringe vorgesehen. Die Ringe wirken querschnittsverengend im Messrohr und dienen zur Strömungskonditionierung bzw. zur gezielten Beschleunigung oder Verlangsamung der Strömung des Messmediums im Messrohr. Die Ringe ragen mindestens 1/5 des Innendurchmessers des Messrohrs in das Messrohr hinein, insbesondere mindestens 1/10, insbesondere mindestens 1/30. So ist ein einzelner Ring vorgesehen, welcher im Messrohr im Bereich des Messrohreinlaufs platziert ist oder es sind mehrere, insbesondere zwei Ringe vorgesehen, welche jeweils den gleichen Abstand zu ihrem nächstliegenden Messrohreinlauf bzw. von Messrohrauslauf aufweisen. Der Abstand vom Ring in Bereich des Messrohreinlaufs vom Messrohreinlauf beträgt dabei zwischen 0 und der Hälfte der Länge des Messrohrs bzw. der Hälfte des Abstands von der ersten zur zweiten Schallein- und/oder Schallauskoppelfläche.

Einer weiteren Weiterbildung der Erfindung zufolge beträgt der Abstand zwischen einer ersten Schallein- und/oder Schallauskoppelfläche und einer zweiten Schallein- und/oder Schallauskoppelfläche höchstens das 15fache des Innendurchmessers des Messrohrs, einer Ausgestaltung zufolge höchstens das 12fache, einer anderen Ausgestaltung zufolge höchstens das Zehnfache, in einer anderen Ausgestaltung höchstens das Achtfache, gemäß einer anderen Ausgestaltung höchstens das Fünffache und gemäß einer weiteren Ausgestaltung mindestens das Zweifache.

Die erste Schallein- und/oder Schallauskoppelfläche ist dabei dem ersten elektromechanischen Wandlerelement zugeordnet, d.h. das Ultraschallsignal, vom ersten elektromechanischen Wandlerelement erzeugt wird, wird über die erste Schallein- und/oder Schallauskoppelfläche in das Messmedium eingekoppelt. Gleichermaßen wird das vom ersten elektromechanischen Wandlerelement empfangene Ultraschallsignal über die erste Schallein- und/oder Schallauskoppelfläche aus dem Messmedium ausgekoppelt. Entsprechendes gilt für die zweite Schallein- und/oder Schallauskoppelfläche und das zweite elektromechanische Wandlerelement.

Gemäß einer weiteren Ausgestaltung des Messsystems besteht das Rohr aus einem Gammasterilisierbarem Material, insbesondere einem Polymer, insbesondere PPSU, PEI, PP, PE oder PVDF.

Gemäß einer weiteren Ausgestaltung des erfindungsgemäßen Messsystems weist das Messsystem Koppelemente auf, welche von der Wandleraufnahmefläche bis zur Schallein- und/oder Schallauskoppelfläche eine Verjüngung des Querschnitts des Koppelelements aufweisen oder welche Koppelemente von der Wandleraufnahmefläche bis zur Schallein- und/oder Schallauskoppelfläche eine Vergrößerung des Querschnitts des Koppelelements aufweisen. Die Verjüngung und/oder die Vergrößerung kann dabei linear, diskret oder exponentiell sein. Beispielhaft weist ein solches Koppelelement einen zylindrischen Längsschnitt, die Form eines Kegelstumpfs oder die Form eines Exponentialhorns auf. Dadurch kann beispielsweise ein elektromechanisches Wandlerelement einer bestimmten Größe für Messrohre mit verschiedenen Größen, insbesondere unterschiedlichen Innendurchmessern verwendet werden.

In einer weiteren Weiterbildung der erfindungsgemäßen Lösung beträgt der Innendurchmesser des Messrohrs mindestens 1 mm, insbesondere mindestens 2mm, in einer anderen Ausgestaltung mindestens 5mm, in einer weiteren Ausgestaltung mindestens 10mm, insbesondere mindestens 20mm, in weiteren Ausgestaltungen beträgt der Innendurchmesser des Messrohrs bis zu 200mm. Die Länge des Messrohrs beträgt erfindungsgemäß mindestens 5mm und kann beispielsweise bis zu 1000mm betragen. Gemäß einer Ausgestaltung beträgt die Messrohrlänge ungefähr das Zweifache des Innendurchmessers des Messrohrs, in einer anderen Ausgestaltung ungefähr das Dreifache oder insbesondere das Fünffache oder die Messrohrlänge beträgt bis zum Zehnfachen des Innendurchmessers des Messrohrs.

Gemäß einer weiteren Weiterbildung der erfindungsgemäßen Lösung, weist das Messsystem ein drittes scheibenförmiges elektromechanisches Wandlerelement und ein viertes scheibenförmiges elektromechanisches Wandlerelement auf, wobei sich das dritte und vierte elektromechanische Wandlerelement im Wesentlichen planparallel gegenüberstehen und wobei die Verbindungslinie zwischen den Mittelpunkten des dritten und vierten elektromechanischen Wandlerelements in einem Winkel δ zur Messrohrachse steht und auf der der die Verbindungslinie zwischen den Mittelpunkten des ersten und zweiten elektromechanischen Wandlerelements gegenüberliegenden Seite der Messrohrachse verläuft. Es ist also mindestens ein weiteres, zweites Wandlerpaar aus einem dritten elektromechanischen Wandlerelement und einem vierten elektromechanischen Wandlerelement vorgesehen, zwischen welchen Ultraschallsignale auf einem zweiten Signal- bzw. Messpfad gesendet und/oder empfangen werden.

Bei einer weiteren Weiterbildung der Erfindung ist der Winkel δ näherungsweise gleich groß wie der Winkel γ. Gemäß einer Ausgestaltung ist der zweite Messpfad parallel zur Messrohrachse.

Gemäß einer weiteren Weiterbildung des erfindungsgemäßen Messsystems ist eine Regel-/Auswerteeinheit vorgesehen, die mindestens anhand von Laufzeitdifferenzen von Ultraschallsignalen entlang eines ersten Messpfads zwischen dem ersten und dem zweiten elektromechanischen Wandlerelement und mindestens anhand von Laufzeitdifferenzen von Ultraschallsignalen entlang eines zweiten Messpfads zwischen dem dritten und dem vierten elektromechanischen Wandlerelement den Durchfluss des Messmediums durch das Messrohr bestimmt und/oder überwacht.

Durch das zweite Wandlerpaar ist eine Kompensation von Messfehlern des ersten Wandlerpaars möglich und/oder umgekehrt. Auch die Bestimmung von Reynolds-Zahlen, im Folgenden nur kurz Re-Zahlen genannt, ist einfacher.

Zusätzlich zu den Laufzeitdifferenzen fließen erfindungsgemäß andere gemessene und/oder vorhandene Parameter, wie z.B. der Innendurchmesser des Messrohrs, in die Bestimmung und/oder Überwachung des Durchflusses ein, wie z.B. auch die Schallgeschwindigkeit, die Signalform oder Re-Zahlen. Sind zwei Messpfade vorhanden werden die Messungen, bzw. die aus den Messignalen abgeleiteten Messdaten, des ersten und des zweiten Messpfads werden miteinander verknüpft bzw. in Beziehung zueinander setzt.

Das Messsystem ist erfindungsgemäß so ausgestaltet, dass das Messsystem zur Bestimmung und/oder Überwachung des Durchflusses von Newtonschen Flüssigkeiten wie Wasser oder Flüssigkeiten mit einer Viskosität zwischen 0.1 und 20 mPas verwendbar ist. Des Weiteren ist das Messsystem geeignet, den Durchfluss des Messmediums in einem Reynoldszahlenbereich >2000, insbesondere >3000, zu bestimmen und/oder zu überwachen.

Weiterhin wird die der Erfindung zugrunde liegende Aufgabe gelöst durch ein Verfahren zur Bestimmung und/oder Überwachung des Durchflusses eines Messmediums durch ein Messrohr, mittels eines erfindungsgemäßen Messsystems mit zwei Messpfaden, wobei der Wert für den Durchfluss anhand eines Wertes für die Reynoldssche Zahl korrigiert wird. Der Vorteil des erfindungsgemäßen Messsystems besteht darin, dass die zwei Messpfade in unterschiedlich schnellen Strömungen messen und die unterschiedlich schnellen Strömungen durch die Geometrie des Messrohrs künstlich erzeugt wurden und dadurch sehr genau bekannt sind, bzw. ihr gegenseitiges Verhältnis, z.B. durch Kalibrierung, sehr genau bekannt ist. Bevorzugt werden die Geschwindigkeiten entlang der mindestens zwei voneinander verschiedenen Messpfade mittels des Laufzeitdifferenz-Prinzips bestimmt. Die Reynoldssche Zahl Re liefert den Korrekturwert für die gemessene Strömungsgeschwindigkeit des ersten Messpfads v1 und/oder für die mittels dem zweiten Messpfad gemessene Strömungsgeschwindigkeit v2, um die mittlere Strömungsgeschwindigkeit v bzw. den Durchfluss Q durch das Messrohr zu bestimmen.

So wird in einem Ausführungsbeispiel der Durchfluss Q durch das Messrohr für bestimmte Reynoldssche Zahlen Re mittels i Funktionen g von Re und den Strömungsgeschwindigkeiten v1 und v2 des Messmediums entlang des ersten und entlang des zweiten Messpfads bestimmt wird, $Q = c * g_i(Re) * v1$, mit i = 1...n, wobei n eine natürlich Zahl ist, und mit c einer Konstanten aus freier Querschnittsfläche des Messrohrs und/oder weiteren Systemparametern und $g_i$ einer unter anderem von der Reynoldsschen Zahl Re abhängigen Funktion, wobei die i Funktionen unterschiedlich sein können, für $0 < Re_1 < Re_2 < Re_3 < ... < Re_n$ mit i = 1 ... n. Für große Reynoldssche Zahlen Re, z.B. Re >> 20000, konvergiert $g_i(Re)$ gegen 1. Gemäß einer Ausgestaltung ist $g_i$ neben Re auch von v1 und/oder v2 abhängig, so dass folgt: $g_i(Re, v1, v2)$.

Gemäß einer Weiterbildung des erfindungsgemäßen Verfahrens wird die Reynoldssche Zahl des strömenden Messmediums durchgängig und ausschließlich entweder anhand von vorbestimmten Konstanten sowie von Verhältnissen der Geschwindigkeiten entlang mindestens zweier voneinander verschiedener Messpfade oder anhand von empirisch ermittelten Koeffizienten sowie von Differenzen der Geschwindigkeiten entlang mindestens zweier voneinander verschiedener Messpfade bestimmt und die Korrektur des Wertes für den Durchfluss erfolgt mit Hilfe des durchgängig bestimmten Wertes für die Reynoldssche Zahl.

Die Reynoldssche Zahl wird mittels einer Funktion f aus den gemessenen Strömungsgeschwindigkeiten des Messmediums entlang des ersten und des zweiten Messpfad bestimmt, Re = f(v1,v2), insbesondere Re = f(v1/v2), wobei v1 die Strömungsgeschwindigkeit des Messmediums entlang des schnelleren Messpfads, insbesondere des ersten Messpfads, ist und wobei v1 die Strömungsgeschwindigkeit des Messmediums entlang des langsameren Messpfads, insbesondere des zweiten Messpfads, ist.

Ein Ausführungsbeispiel der Erfindung ist, dass die Reynoldssche Zahl mittels der Funktion f und den empirisch bestimmten Faktoren a und b wie folgt bestimmt wird: Re = $f(v1/v2)$ = ln((1-$v1/v2*a$)/$b$, wobei v1 die Strömungsgeschwindigkeit des Messmediums entlang des schnelleren Messpfads ist und v1 die Strömungsgeschwindigkeit des Messmediums entlang des langsameren Messpfads ist.

Gemäß einem weiteren Ausführungsbeispiel bewegt sich a im Bereich von 0,1 bis 100, insbesondere von 1 bis 10, so ist a z.B. ungefähr 6, und b bewegt sich im Bereich von 0 bis -0,1, so ist b z.B. ungefähr -0.00015. Die Faktoren a und b sind dabei beispielsweise abhängig von der Messrohrgeometrie, insbesondere vom freien Querschnitt bzw. vom Innendurchmesser des Messrohrs, von der Querschnittsform, vom Vorhandensein von strömungskonditionierenden Ringen, von der Geometrie des Messrohreinlaufs und/oder des Messrohrauslaufs und/oder weiteren Systemparametern.

Eine Weiterbildung des erfindungsgemäßen Verfahrens ist darin zu sehen, dass das Messsignal und/oder die aus dem Messsignal abgeleiteten Messdaten des ersten Messpfads mittels des Messsignals und/oder der aus dem Messsignal abgeleiteten Messdaten des zweiten Messpfads korrigiert werden.

Eine weitere Weiterbildung der Erfindung ist darin begründet, dass die Reynoldssche Zahl Re in Abhängigkeit von der dynamischen Viskosität v bestimmt wird.

Die dynamische Viskosität v des Messmediums im Messrohr wird anhand von Referenz- oder Kalibriermessungen in einem ausgewählten Bereich von Reynoldsschen Zahlen Re, z.B. von mindestens 2000 oder z.B. ab Re = 4000, und insbesondere von Re < 50000, insbesondere kleiner 20000 bestimmt. Diese Bestimmung erfolgt beispielsweise anhand des Geschwindigkeitsverhältnisses v1/v2 des schnelleren und langsameren ersten und zweiten Messpfads. Es gilt $\underline{v} = \dfrac{di * v}{\mathrm{Re}}$

mit v der dynamischen Viskosität, v der mittleren Strömungsgeschwindigkeit des Messmediums im Messrohr, di dem Innendurchmesser des Messrohrs und Re der Reynoldsschen Zahl. Der Wert für die dynamische Viskosität v wird dann für alle anderen Geschwindigkeits- bzw. Reynoldszahlen-Bereiche als Bezugswert verwendet oder durch mehrere Referenz- oder Kalibriermessungen wird eine Funktion der dynamischen Viskosität v(Re) in Abhängigkeit von der Reynoldsschen Zahl bestimmt.

Aus dem Verhältnis von den gemessenen Strömungsgeschwindigkeiten des Messmediums im Messrohr bzw. des sich daraus ableitbaren Durchflusses Q1 entlang des ersten Messpfads und entlang des zweiten Messpfads Q2 zur Reynoldsschen Zahl Re ergibt sich in einem ersten Beispiel: Re = $f(Q1/Q2)$.

Zuerst werden z.B. die Strömungsgeschwindigkeiten v1 und v2 entlang beider Messpfade bestimmt und daraus die Durchflüsse Q1 und Q2 errechnet, wie sie durch das Messrohr auftreten würden, wenn die gemessenen Geschwindigkeiten v1 und v2 jeweils die mittlere Strömungsgeschwindigkeit v widerspiegeln würden.

Anhand empirisch ermittelter Daten, z.B. aus einer Referenz- oder Kalibriermessung, kann über dieses Verhältnis die Reynoldssche Zahl bestimmt werden. Aus dieser Reynoldsschen Zahl Re, dem Innendurchmesser di des Messrohrs und der dann mittleren Strömungsgeschwindigkeit v, welche sich wiederum aus den beiden Geschwindigkeiten v1 und v2 ergibt, lässt sich die dynamische Viskosität v berechnen: $\underline{v} = \dfrac{di * v}{\mathrm{Re}}$.

Das Messsystem wird in einem bestimmten Reynoldszahlenbereich kalibriert, wobei hier davon ausgegangen wird, dass der erste Messpfad mit Q1 bzw. v1 strömungsbedingt den größeren Durchfluss misst, d.h. also der schnellere Messpfad von Beiden ist. Oberhalb eines bestimmten Verhältnisses, z.B. Q1/Q2 > 0.93, von den beiden ermittelten Durchflüssen Q1 und Q2, wird der Wert des schnelleren, ersten Messpfades Q1 ausgegeben. Unterhalb dieses Verhältnis-Wertes erfolgt eine Verrechnung beider Messwerte nach folgender Formel zur Abschätzung des Durchflusses Q: Q = (1-j)*Q1 + j*Q2 mit j = - 0.11 in diesem Beispiel.

Ein folgendes Beispiel soll dieses Verfahren verdeutlichen. Die chemische Zusammensetzung des Messmediums und damit dessen dynamische Viskosität sind im Wesentlichen bekannt, zumindest in einem gewissen Temperaturbereich. Nach $\underline{v} = \dfrac{di * v}{\mathrm{Re}}$ ist daher die Reynoldssche Zahl mittels der mittleren Strömungsgeschwindigkeit, welche im Wesentlichen proportional zum Durchfluss Q ist, grob abzuschätzen. Es wird in einer Referenz- oder Kalibriermessung eine mittlere Strömungsgeschwindigkeit eingestellt, für die gilt Re >> 20000, z.B. Re ≈ 50000. Anschließend werden die ermittelten Strömungsgeschwindigkeiten v1 und v2 bzw. die daraus abgeleiteten Durchflüsse Q1 und Q2 entlang des ersten und zweiten Messpfads gemessen und bei anschließend sinkenden Reynoldszahlen aufgetragen.

Hat die Reynoldssche Zahl eine bestimmte Größe erreicht, so hat das Verhältnis der beiden Strömungsgeschwindigkeiten v1/v2 ein Minimum in seinem Verlauf über die Reynoldszahlen erreicht. Dieses Minimum ist typisch für eine bestimmte Reynoldszahl und ist unter anderem abhängig von der Rohrgeometrie. Gemäß einem erfindungsgemäßen Rohr liegt dieser Wert bei Re ≈ 4050. Alternativ kann z.B. auch ein Schleppzeiger für v1/v2 mit den sinkenden Reynoldszahlen mitlaufen und das Minimum beim Reduzieren der Strömungsgeschwindigkeit bzw. des Durchflusses des Messmediums durch das Messrohr erfasst werden und/oder v1 bzw. v2 zugeordnet werden.

Da bekannt ist, dass sich das Minimum von v1/v2 bei einem bestimmten Reynoldszahlenwert befindet, ist nun ein sehr genauer Wert für die Reynoldszahl errechenbar. Dadurch kann auch die dynamische Viskosität relativ genau errechnet werden, zumindest für den kalibrierten Reynoldszahlenbereich, also z.B. zwischen 3000 und 20000.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.

Fig. 1 zeigt schematisch ein erfindungsgemäßes Messsystem mit einem erfindungsgemäßen Messrohr,

Fig. 2 zeigt ein beispielhaftes, nicht erfindungsgemäßes Messsystem mit einem beispielhaften, nicht erfindungsgemäßen Messrohr,

Fig. 3 zeigt ein weiteres erfindungsgemäßes Messsystem mit einem erfindungsgemäßen Messrohr,

Fig. 4 zeigt verschiedene Koppelemente im Querschnitt,

Fig. 5 zeigt ein erfindungsgemäßes Messsystem mit zwei Ultraschallwandlern, einem Messrohr und einer Grundplatte in einer Draufsicht,

Fig. 6 zeigt ein 3 dimensionales Abbild eines erfindungsgemäßen Messrohrs,

Fig. 7 zeigt einen detaillierten Querschnitt durch ein erfindungsgemäßes Messsystem

Fig. 8 zeigt einen erfindungsgemäßen Bügelverschluss in 3D,

Fig. 9 zeigt eine Kabelführung in einer erfindungsgemäßen Grundplatte,

Fig. 10 zeigt ein weiteres erfindungsgemäßes Messrohr,

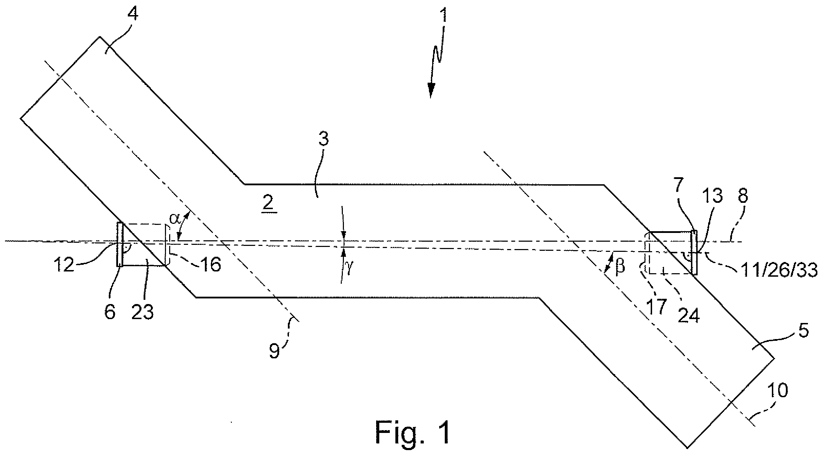

In Fig. 1 ist ein erfindungsgemäßes Messrohr 3 eines erfindungsgemäßen Messsystems 1 schematisch im Schnitt dargestellt. Das Messrohr 3 weist jeweils einen ersten Messrohreinlauf 4 und einen ersten Messrohrauslauf 5 auf. Der Messrohreinlauf 4 weist einen über seine Länge näherungsweise konstanten Querschnitt auf. Dieser ist in dieser Ausgestaltung näherungsweise gleich dem Querschnitt des Messrohrs 3, sowohl in Form als auch in Größe. Der Messrohrauslauf 5 hingegen ist leicht kegelförmig, so dass der Querschnitt des Messrohrauslaufs 5, welcher an das Messrohr grenzt, etwas größer ist, als der Querschnitt des Messrohrauslaufs 5, welcher als Prozessanschluss nutzbar ist. Sowohl die Messrohrachse 8, als auch die Messrohreinlaufachse 9 und die Messrohrauslaufachse 10 liegen in einer Raumebene, hier die Zeichenebene, wobei der Messrohreinlauf 4 und der Messrohrauslauf 5 auf sich gegenüberliegenden Seiten des Messrohrs 3 angeordnet sind.

Scheibenförmige elektromechanische Wandlerelemente 6 und 7, zur Wandlung elektrischer Signale in Ultraschallsignale und/oder umgekehrt, sind an Ultraschallwandleraufnahmen 23 und 24 akustisch gekoppelt. Die Ultraschallwandleraufnahmen 23 und 24 weisen im Wesentlichen zylindrische Form auf. Sie übernehmen die Funktion der Kopplung der Ultraschallsignale in das Messmedium 2. Dazu werden die Ultraschallsignale von den elektromechanischen Wandlerelementen 6, 7 erzeugt und an den Wandleraufnahmeflächen in die Ultraschallwandleraufnahmen 23 und 24 eingekoppelt, welche ihrerseits die Ultraschallsignale bis zum Messmedium 2 leiten und über ihre Schallein- bzw. Schallauskoppelflächen 16 und 17 die Ultraschallsignale in das Messmedium 2 einkoppeln. Werden die Ultraschallsignale vom Messmedium 2 zurück zu den elektromechanischen Wandlerelementen geführt, so werden sie an den Schallein- bzw. Schallauskoppelflächen 16 und 17 aus dem Messmedium 2 ausgekoppelt und bis zu den elektromechanischen Wandlerelementen 6, 7 von den Ultraschallwandleraufnahmen 23 und 24 geleitet. Die Schallein- bzw. Schallauskoppelflächen 16 und 17 sind hier kleiner als die Flächen der elektromechanischen Wandlerelementen 6, 7. Die Ultraschallwandleraufnahmen 23 und 24 besitzen zumindest im Bereich der Schallein- bzw. Schallauskoppelflächen 16 und 17 die Form eines Exponentialhorns. Die Ultraschallsignale breiten sich entlang eines so genannten Signal- oder Messpfads aus. Modellhaft wird hier ein geradenförmiger Messpfad beschrieben. Die Wellenfronten des Ultraschallsignals stehen im Wesentlichen senkrecht auf dem Messpfad.

Sowohl die Schallein- bzw. Schallauskoppelflächen 16 und 17, als auch die elektromechanischen Wandlerelementen 6, 7 und die Wandlerautnahmeflächen der Ultraschallwandleraufnahmen 23 und 24 besitzen einen im Wesentlichen kreisrunden Querschnitt. Die Mittelpunkte 27, 28 der Schallein- bzw. Schallauskoppelflächen 16 und 17 und die Mittelpunkte der elektromechanischen Wandlerelementen 6, 7 und die der Wandleraufnahmeflächen der Ultraschallwandleraufnahmen 23 und 24 liegen auf einer einzigen geraden.

Da elektromechanische Wandlerelemente 6, 7 näherungsweise planparallel zu den Schallein- bzw. Schallauskoppelflächen 16, 17 sind und sich die Schallein- bzw. Schallauskoppelflächen 16, 17 im Wesentlichen planparallel gegenüberstehen und sich die Querschnitte der Ultraschallwandleraufnahmen 23 und 24 von den Wandleraufnahmeflächen zu den Schallein- bzw. Schallauskoppelflächen 16, 17 achsensymmetrisch ändern, gilt der Messpfad als zusammenfallend mit der Verbindungslinie 11 zwischen den Mittelpunkten 12 und 13 der elektromechanischen Wandlerelementen 6, 7 und damit sind der Winkel $\gamma$ zwischen der Verbindungslinie 11 zwischen den Mittelpunkten 12 und 13 des ersten und zweiten elektromechanischen Wandlerelements 6, 7 und zwischen der Messrohrachse 8 und der Winkel $\eta$ zwischen der Verbindungslinie zwischen den Mittelpunkten der Schallein- und/oder Schallauskoppelflächen 16, 17 und der Messrohrachse 8 und der Winkel $\theta$ zwischen der Verbindungslinie zwischen den Mittelpunkten der Wandleraufnahmeflächen und der Messrohrachse 8 gleich und gleich dem Winkel $\zeta$ des Messpfads.

Der Messpfad oder auch Signalpfad, welcher hier gleich der Verbindungslinie 11 zwischen den Mittelpunkten 12 und 13 der elektromechanischen Wandlerelementen 6, 7 ist, ist leicht zur Messrohrachse 8 geneigt. Der Winkel $\zeta$ bzw. $\gamma$ beträgt hier ca. 5°. Jedoch verläuft der Messpfad 11 vollständig auf der Seite der Messrohrachse 8, auf welcher sich der Messrohrauslauf 5 befindet. Eine erste gedachte Raumebene wird, wie bereits beschreiben, von der Messrohrachse 8 und den Messrohreinlauf- und Messrohrauslaufachsen 9 und 10 aufgespannt. Eine zweite gedachte Ebene ist dann senkrecht zur ersten gedachten Ebene und schneidet die erste gedachte Ebene in einer ersten Schnittgeraden. Diese erste Schnittgerade ist in dieser Ausgestaltung die Messrohrachse 8 selbst. Dann schneidet die Verbindungslinie zwischen den Mittelpunkten der Schallein- und/oder Schallauskoppelflächen 16, 17 bzw. hier der Messpfad die zweite gedachte Ebene nicht. Der Messpfad 11 befindet sich auf der Seite der zweiten gedachten Ebene, auf welcher auch der Messrohrauslauf 5 am Messrohr 3 angeordnet ist.

Durch die bereits aufgezeigten Bedingungen sind die Flächen der elektromechanischen Wandlerelements 6, 7, der Wandleraufnahmeflächen und insbesondere der Schallein-und/oder Schallauskoppelflächen 16, 17 kleiner als der freie Querschnitt des Messrohrs 3, welcher hier dem Innendurchmesser des Messrohrs 3 ableitbar ist.

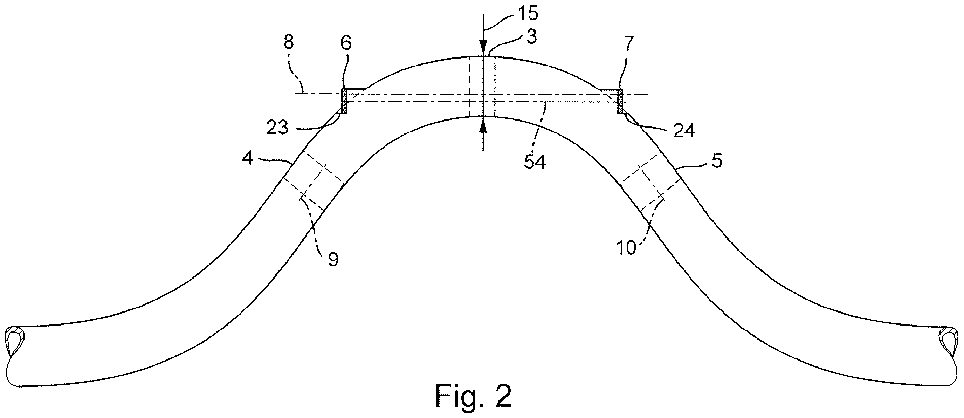

Fig. 2 offenbart ein beispielhaftes, nicht erfindungsgemäßes Messsystem 1 mit einem Messrohr 3. Das Messrohr 3 hat in diesem Ausführungsbeispiel einen näherungsweise kreisrunden Querschnitt und eine, relativ zu seinem Durchmesser, kurze Längsausdehnung. Auch der Messrohreinlauf 4 und der Messrohrauslauf 5 haben näherungsweise gleiche und kreisrunde Querschnitte. Auch diese sind, relativ zu ihren Querschnitten gesehen, kurz. In diesem Ausführungsbeispiel grenzen der Messrohreinlauf 4 und der Messrohrauslauf 5 nicht direkt an das Messrohr 3. Sie sind mit diesem jedoch jeweils über ein Zwischenrohr 73, 74 verbunden. Die Zwischenrohre 73, 74 sind gekrümmt und bzw. gebogen. Eine Definition von geradenförmigen Achsen in den Zwischenrohren 73, 74 ist daher nicht einfach möglich. Sowohl das Messrohr 3, als auch der Messrohreinlauf 4 und der Messrohrauslauf 5, weisen hier eine bestimmte Länge mit einer geraden Mittelachse 8, 9, 10 auf, auf welcher alle Mittelpunkte des jeweiligen Rohrs 3, 4, 5 liegen.

Die Messrohrauslaufachse 10 und Messrohrachse 8 spannen eine erste gedachte Ebene auf, also sowohl die Messrohrauslaufachse 10 als auch die Messrohrachse 8 liegen in der ersten gedachten Ebene, hier der Zeichenebene. Senkrecht zu dieser ersten gedachten Ebene verläuft eine zweite gedachte Ebene, wobei die Messrohrachse 8 in dieser zweiten gedachten Ebene liegt, die Messrohrachse 8 ist also Teil der ersten Schnittgeraden zwischen erster und zweiter gedachter Ebene. Die Verbindungslinie zwischen den Mittelpunkten der sich hier planparallel gegenüberstehenden ersten und zweiten elektromechanischen Wandlerelementen 6 und 7, welche hier gleich dem einbeschriebenen Messpfad gleicht, verläuft nun auf der Seite des Messrohrauslaufs und schneidet die zweite Ebene nicht. Der Messpfad liegt vielmehr in einer gedachten Drittelebene, welche parallel zur zweiten gedachten Ebene den Innendurchmesser 15 des Messrohrs 3 drittelt. Entlang des Mess- oder auch Signalpfads erfolgt die Ausbreitung der von den elektromechanischen Wandlerelementen 6 und 7 erzeugten Ultraschallwellen, deren gemessene Laufzeitdifferenz in und entgegen der Strömung des Messmediums im Messrohr 3 in die Berechnung des Durchflusses mit einfließt.

Dadurch dass der Messpfad 54 in einem Bereich des Messrohrs 3 angeordnet ist, wo durch die besondere Form des Messrohrs 3 ein durch Kalibrierung bekanntes Strömungsprofil vorliegt, so befindet sich der Messpfad 54 z.B. in einer im Vergleich zu der im Bereich der Messrohrachse vorherrschenden Strömung beschleunigten Strömung, ist die Qualität der Messung bzw. Bestimmung des Durchflusses, insbesondere für viskose Messmedien oder insgesamt sehr langsame Strömungen und/oder Durchflüsse, erhöht.

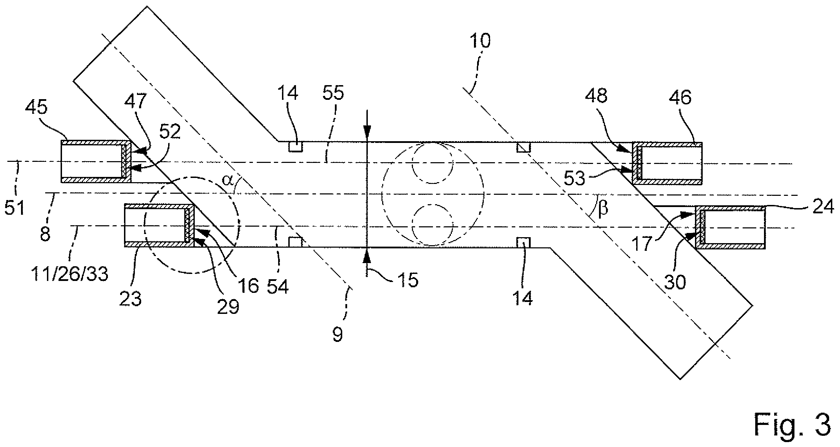

Fig. 3 zeigt ein weiteres erfindungsgemäßes Messrohr 3 eines erfindungsgemäßen Messsystems 1 schematisch im Schnitt dargestellt. Es weist im Wesentlichen gleiche Querschnitte des Messrohrein- 4 und auslaufs 5 und des Messrohrs 3 auf. Sowohl der Messrohreinlauf 4, als auch der Messrohrauslauf 5 weisen einen Winkel von ca. 45° zur Messrohrachse auf, also gilt $\alpha \approx \beta \approx 45°$. Weiterhin weist das Messrohr 3 vier Ultraschallwandleraufnahmen 23, 24, 45, 46 auf. Die Ultraschallwandleraufnahmen 23, 24, 45, 46 sind jeweils topfförmig ausgestaltet. In die topfförmigen Ultraschallwandleraufnahmen 23, 24, 45, 46 können elektromechanische Wandlerelemente 6, 7, 19, 20 eingebracht werden. Die Ultraschallwandleraufnahmen 23, 24, 45, 46 dienen dann, als Koppelelemente zwischen den elektromechanischen Wandlerelementen 6, 7, 19, 20 und dem Messmedium 2 im Messrohr 3. Die elektromechanischen Wandlerelemente 6, 7, 19, 20 werden mit den Wandleraufnahmeflächen 29, 30, 52, 53 der Ultraschallwandleraufnahme 23, 24, 45, 46 akustisch gekoppelt. In diesem Ausführungsbeispiel stellen die Wandleraufnahmeflächen 29, 30, 52, 53 gleichermaßen die Topfinnenböden der topfförmigen Ultraschallwandleraufnahmen 23, 24, 45, 46 dar.

Die Verbindungslinie 26 zwischen den Mittelpunkten 27 und 28 der ersten und zweiten Schallein-undloder Schallauskoppelfläche 16, 17, welche hier der Verbindungslinie 11 zwischen des ersten und zweiten elektromechanischen Wandlerelements 6, 7 entspricht, weist also erfindungsgemäß einen Winkel $\gamma$ zur Messrohrachse 8 auf. Hier ist dieser Winkel $\gamma$ 0° bzw. 180°, d.h. die Verbindungslinie 26 und Messrohrachse 8 sind parallel zueinander. Ebenso verhält es sich mit der Verbindungslinie 51 zwischen den Mittelpunkten 49 und 50 der dritten und vierten Schallein- und/oder Schallauskoppelfläche 47, 48.

Die vier Ultraschallwandleraufnahmen 23, 24, 45, 46 liegen sich paarweise gegenüber, wobei die erste und die dritte Ultraschallwandleraufnahme 23, 45 im Bereich des Messrohreinlaufs 4 liegen und die zweite und die vierte Ultraschallwandleraufnahme 24, 46 im Bereich des Messrohrauslaufs 5 angeordnet sind. Dadurch ergeben sich zwei Messpfade 54, 55, wobei sich der erste Messpfad 54 zwischen dem ersten und zweiten elektromechanischen Wandlerelements 6 und 7 befindet, welche hier in der ersten und zweiten Ultraschallwandleraufnahme 23, 24 angeordnet sind, und wobei sich der zweite Messpfad 55 zwischen den in der dritten und vierten Ultraschallwandleraufnahme 45, 46 angeordneten dritten und vierten elektromechanischen Wandlerelementen 19 und 20 befindet. Dabei sind beide Messpfade parallel zur Messrohrachse 8, d.h. sie stehen in einem Winkel $\zeta$, respektive $\xi$, von näherungsweise 0° bzw. 180° zur Messrohrachse 8, und beide Messpfade 54, 55 fallen jeweils mit den jeweiligen Verbindungslinien 11, 51, 26, 33 zwischen den Mittelpunkten der bereits bekannten Flächen der Schalleinkoppel- und/oder Schallauskoppelfläche 16, 17, 47, 48 bzw. der Wandleraufnahmeflächen 29, 30, 52, 53 zusammen. Die sich paarweise gegenüberstehenden Wandlerelemente 6 und 7, sowie 19 und 20 sind somit im Wesentlichen planparallel zueinander. Es versteht sich von selbst, dass sowohl die elektromechanischen Wandlerelementen 6, 7, 19, 20 als auch die Schalleinkoppel- und/oder Schallauskoppelflächen 16, 17, 47, 48 wesentlich kleiner sind, als der Messrohrdurchmesser 15.

Wie die Abbildung veranschaulicht, teilt die Messrohrachse 8 den Querschnitt des Innendurchmessers 15 des Messohrs 3 in zwei gleichgroße Teile. Wie ebenfalls unschwer zu erkennen, wird dieser geteilte Innendurchmesser 15 wiederum von dem ersten Messpfad 54 geteilt. Die sich gegenüberstehenden Schalleinkoppel- und/oder Schallauskoppelflächen 16 und 17 befinden sich vollständig und deutlich auf der Seite der Messrohrachse 8, auf welcher auch der Messrohrauslauf 5 liegt. Daher liegt der erste Messpfad 54 auch deutlich jenseits einer Linie, welche den Innendurchmesser 15 des Messrohrs 3 drittelt. Hier liegt der erste Messpfad 15 sogar auf der Seite einer so genannten Viertelebene, also einer Ebene parallel zu einer zweiten gedachten Raumebene, welche Viertelebene den Innendurchmesser 15 des Messrohrs 3 viertelt, auf welcher Seite der gedachten Viertelebene auch der Messrohrauslauf 5 angeordnet ist, wobei die zweite gedachte Raumebene senkrecht zu einer ersten Raumebene steht, mit der Messrohrachse 8 als Schnittgeraden zwischen erster und zweiter Raumebene, welche erste Raumebene von der Messrohrachse 8 und dem Messrohrauslauf 5 aufgespannt wird.

Zusätzlich weist das Messrohr 3 auf seiner Innenseite zwei Ringe 14 auf, welchen den freien Querschnitt des Messrohrs 3 verkleinern. Dadurch wird die Strömung des Messmediums im Messrohr 3 konditioniert und die Messgenauigkeit erhöht. Die Ringe 14 ragen 1/10 des Innendurchmessers des Messrohrs in das Messrohr hinein. Jeder Ring 14 hat einen Abstand von dem zu ihm nächstliegenden Messrohrein- 4 und/oder -auslauf 5 von 0 bis 1/2 der Messrohrlänge zueinander. Durch die Ringe 14 wird die eine Linearisierung der Messcharakteristik erreicht, die aber gleichzeitig eine Veränderung des Algorithmus zur Reynoldszahlenbestimmung erfordert.

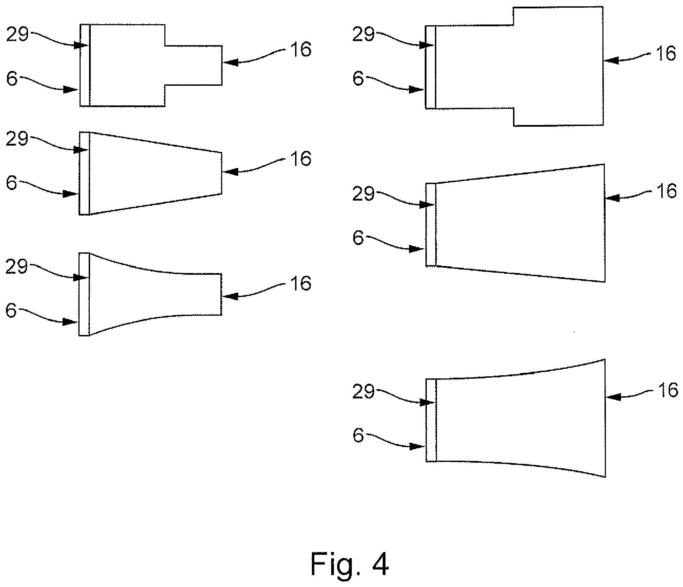

In Fig. 4 sind verschiedene Koppelelemente im Querschnitt gezeichnet. Durch eine Verkleinerung der Querschnittsfläche von der Wandleraufnahmefläche 29 zur Schallein- und/oder Schallauskoppelfläche 16 wird die Signalenergie des elektromechanischen Wandlerelements 6 gebündelt. Dies ist vorteilhaft für die Abstrahlung von Ultraschallsignalen. Es wird ein schärferer Ultraschallstrahl erhalten. Umgekehrt wirkt die Vergrößerung der Querschnittsfläche von der Wandleraufnahmefläche 29 zur Schallein- und/oder Schallauskoppelfläche 16 als Trichter für eintreffende Ultraschallsignale. Ihre Signalenergie wird wiederum vor dem Auftreffen auf das elektromechanische Wandlerelement 6 gebündelt.

Die Koppelelemente nehmen dabei verschiedene Formen an. Dargestellt ist lediglich eine Auswahl ohne Anspruch auf Vollständigkeit. Neben der Abstufung des Koppelelements sind auch Koppelelemente in Form eines Kegelstumpfs oder eines Exponentialhorns dargestellt. Es ist ebenfalls ein System aus akustischen Linsen vorstellbar.

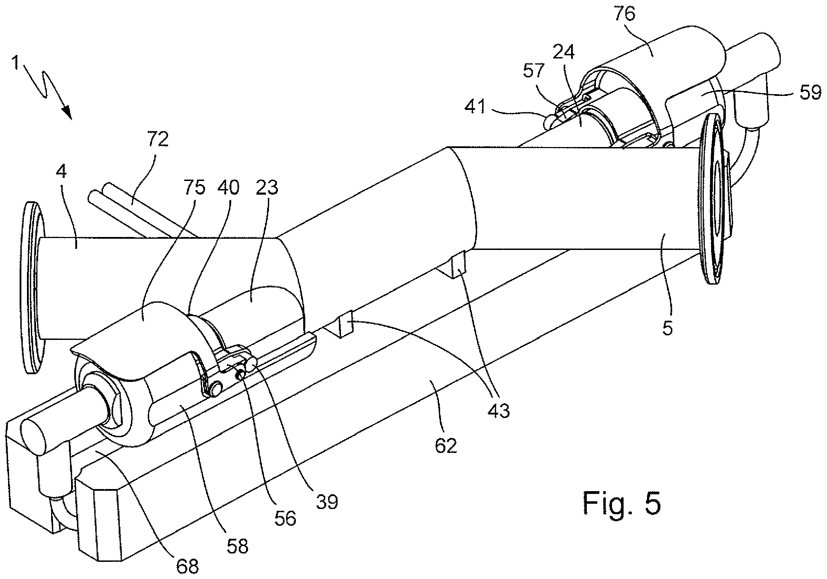

Fig. 5 skizziert dreidimensional ein erfindungsgemäßes Messsystem 1. Das Messsystem umfasst eine Grundplatte 62, mit einer nicht dargestellten Kupplung zur Befestigung des Messrohrs 3. Das Messrohr 3 wiederum weist einen zur Kupplung der Grundplatte 62 passenden Stecker 43 auf. Durch Einstecken des Steckers 43 in die Kupplung 44 ist das Messrohr 3 lösbar mit der Grundplatte 62 verbunden und gegen verdrehen und verschieben gesichert. Lediglich durch Ausstecken lässt sich das Messrohrs 3 relativ zur Grundplatte 62 bewegen. Das Messrohr 3 weist erfindungsgemäß einen Messrohreinlauf 4 und einen Messrohrauslauf 5 auf, welche hier in einer Raumebene liegen.

Weiterhin umfasst das Messsystem 1 einen ersten Ultraschallwandler 58 und einen zweiten Ultraschallwandler 59. Der zweite Ultraschallwandler 59 ist in diesem Ausführungsbeispiel, ähnlich wie das Messrohr 3, auf die Grundplatte 62 gesteckt und mit dieser lösbar verbunden. Somit ist auch der zweite Ultraschallwandler 59 nur durch Ausstecken relativ zur Grundplatte 62 zu bewegen. Der erste Ultraschallwandler 58 hingegen, ist koaxial zur Messrohrachse verschiebbar auf der Grundplatte 62 gelagert. Er weist ein erstes, hier nicht verkörpertes, Führungselement auf, welches zusammen mit einem zweiten Führungselement 68 der Grundplatte 62 die Verschiebbarkeit des ersten Ultraschallwandlers 58 gewährleistet. Hier ist das zweite Führungselement 68 eine T-Nut Eine am ersten Ultraschallwandler 58 befestigte und entsprechend ausgestaltete Schiene ermöglicht die formschlüssige Verbindung von erstem Ultraschallwandler 58 und Grundplatte 62 mit gleichzeitigem Freiheitsgrad des ersten Ultraschallwandlers 58 koaxial zur Messrohrachse. Der erste Ultraschallwandler 58 wird zur Montage an das Messrohr 3 heran geschoben und durch Umlegen des ersten Bügels 56 an das Messrohr 3 akustisch gekoppelt.

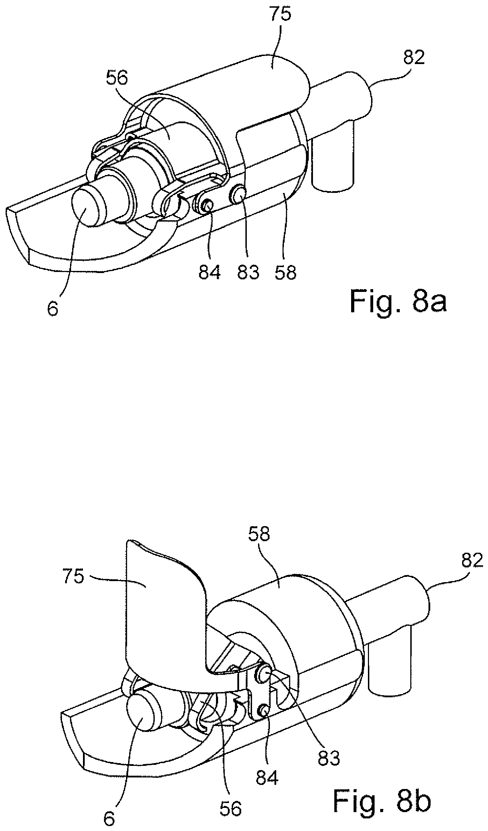

Sowohl der erste Ultraschallwandler 58 weist einen ersten Bügel 56 auf, als auch der zweite Ultraschallwandler 59 weist einen zweiten Bügel 57 auf. Die Bügel 56, 57 sind so ausgestaltet, dass sie in die am Messrohr 3 bzw. an den Ultraschallwandleraufnahmen 23, 24 angeordneten Zapfen 39, 40, 41 im umgelegten Zustand einhaken und somit die Ultraschallwandler 58 und 59 am Messrohr 3 lösbar befestigen. Eine mögliche Ausgestaltung der Mechanik der Befestigung wird in den Fig. 8a und 8b präsentiert. Durch Umlegen der Spannbügel 75 und 76 werden die Bügel 56, 57 umgelegt und die Ultraschallwandler 58 und 59 montiert bzw. wieder vom Messrohr gelöst. Fig. 5 zeigt die Ultraschallwandler 58 und 59 im montierten Zustand und damit die Bügel 56 und 57 in umgelegtem bzw. geschlossenem Zustand. Die Spannbügel 75 und 76 dienen hier gleichzeitig als Sicherungsbügel bzw. Verriegelungshebel.

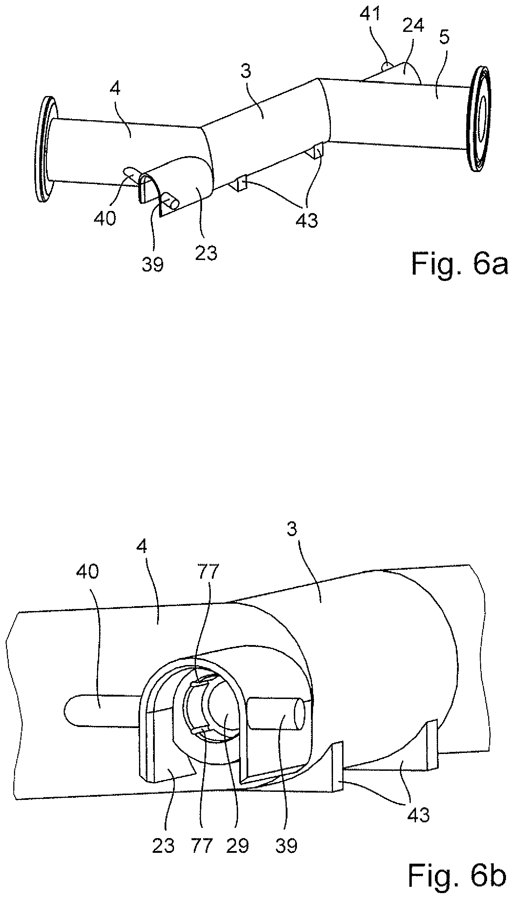

Die Fig. 6a und 6b beschreiben das Messrohr 3 mit einem Messrohreinlauf 4 und einem Messrohrauslauf 5, wie es in Fig. 5 noch auf der Grundplatte montiert dargestellt ist. Zu sehen sind die Ultraschallwandleraufnahmen 23 und 24, welche aus der Mitte des Messrohrs 3 heraus versetzt sind. Dadurch entsteht ein Messpfad, welcher auf der Seite der Messrohrachse verläuft, auf welcher sich der Messrohrauslauf 5 befindet. Weiterhin ist der Stecker 43 zum Andocken des Messrohrs 3 auf einer Grundplatte am Messrohr 3 vorgesehen und die Zapfen 39, 40, 41 zum Koppeln von Ultraschallwandlern. Die erste Ultraschallwandleraufnahme 23 ist topfförmig ausgestaltet. Eine erste Wandleraufnahmefläche 29 bildet den Topfboden der Ultraschallwandleraufnahme 23. An diese erste Wandleraufnahmefläche 29 ist das erste elektromechanische Wandlerelement 6 direkt oder indirekt über ein erstes Koppelelement des ersten Ultraschallwandlers akustisch koppelbar. Zur Führung des ersten Ultraschallwandlers weist die erste Ultraschallwandleraufnahme 23 Führungsschienen 77 auf. Diese dienen hier der zur Messrohrachse koaxialen Ausrichtung und Führung des ersten Ultraschallwandlers.

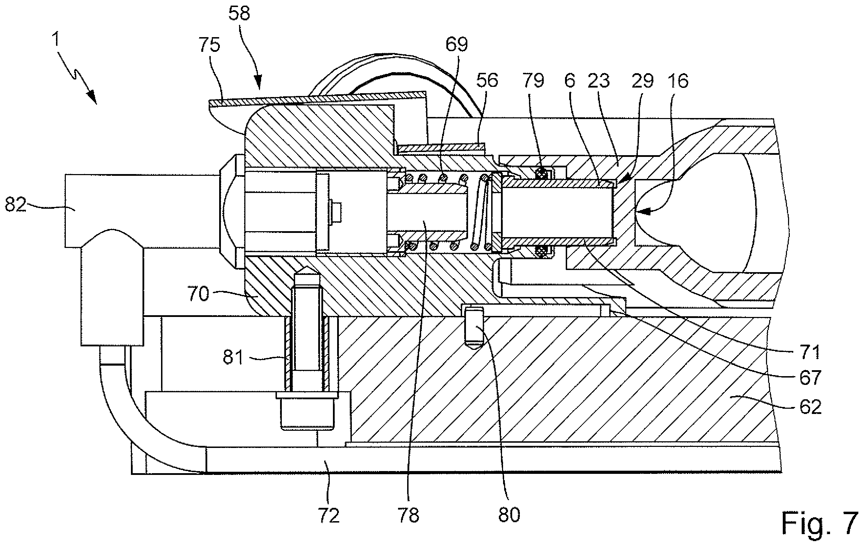

Fig. 7 zeigt einen Querschnitt durch ein erfindungsgemäßes Messsystem 1 mit einem erfindungsgemäßen Messrohr einem ersten Ultraschallwandler 58 und einer Grundplatte 62. Der erste Ultraschallwandler 58 weist ein erstes elektromechanisches Wandlerelement 6 auf, mittels welchem empfangene Ultraschallsignale in elektrische Signale umgewandelt werden oder welches elektrische Signale in Ultraschallsignale wandelt. Das erste elektromechanische Wandlerelement 6 ist an der Spitze einer so genannten Sensortasse 71 angeordnet. Die Sensortasse 71 wird in der ersten Ultraschallwandleraufnahme 23 geführt. Das erste elektromechanische Wandlerelement 6 steht in näherungsweise akustischer Spaltlosem Kontakt mit der ersten Wandleraufnahmefläche 29 der ersten Ultraschallwandleraufnahme 23. Die Mittelpunkte der ersten Wandleraufnahmefläche 29 der ersten Ultraschallwandleraufnahme 23 und des ersten elektromechanischen Wandlerelements 6 liegen auf einer Achse, welche Achse gleich der Verbindungslinie zwischen den Mittelpunkten der ersten Schallein- und/oder Schallauskoppelfläche 16 der ersten Ultraschallwandleraufnahme 23 und der zweiten Schallein- und/oder Schallauskoppelfläche der zweiten Ultraschallwandleraufnahme und damit gleich dem ersten Messpfad ist. Die erste Ultraschallwandleraufnahme 23 ist topfförmig dargestellt mit der ersten Wandleraufnahmefläche 29 als Topfboden.

Angepresst wird das erste elektromechanische Wandlerelement 6 bzw. die Sensortasse 71 über eine Spiralfeder 69. Die Federkraft der Spiralfeder 69 ist wiederum unter anderem abhängig von der Position des ersten Ultraschallwandlers 58 relativ zur ersten Wandleraufnahmefläche 29. Diese ist im montierten Zustand, also wenn die Bügel 56 umgelegt sind, durch Umlegen des ersten Spannbügels 75, und in die Zapfen am Messrohr eingegriffen haben, nur von Fertigungstoleranzen der einzelnen Bauteile beeinflusst. Einstellen lässt sich diese Federkraft mittels einer Einstellschraube 78. Die Einstellschraube 78 ist mit dem Gehäuse 70 des ersten Ultraschallwandlers 58 verbunden und die Spiralfeder 69 liegt einerseits an der Einstellschraube 78 an und andererseits an der Sensortasse 71. Durch die Einstellschraube 78 ist eine vorgegebene Kraft auf das erste elektromechanische Wandlerelement 6 bzw. auf die erste Wandleraufnahmefläche 29 einstellbar.

In der Achse parallel zum Messpfad wird der erste Ultraschallwandler 58 von dem Befestigungsmechanismus mit den Bügeln und den Zapfen festgestellt. Die anderen Freiheitsgrade werden mittels einem ersten und einem zweiten Führungselement, welche am ersten Ultraschallwandler 58 und der Grundplatte 62 angeordnet sind eingeschränkt. Eine Relativbewegung des ersten Ultraschallwandlers 58 zur Grundplatte 62 ist im montierten Zustand nur in dem Maße der Eindrückung der Feder 69 möglich. Die Aufgaben und Funktionen des ersten und zweiten Führungselements, also der so genannten Linearführung des Ultraschallwandlers 58 auf der Grundplatte 62, sind in dieser Ausgestaltung verteilt auf einen Zylinderstift 80, welcher fest in der Grundplatte 62 verankert ist, und einer Führungsbahn 67 im Ultraschallwandler. Zusätzlich ist eine Schraube in einer Distanzhülse 81 in eingeschränktem Maße zu einer Relativbewegung koaxial zum Messpfad fähig.

In den Fig. 8a und 8b ist eine Mechanik zur Befestigung der Ultraschallwandler am Messrohr illustriert. Der erste Ultraschallwandler 58 ist in Fig. 8a mit geschlossener Befestigungsmechanik, d.h. mit umgelegtem Bügel, und in Fig. 8b mit offenem Bügel zu sehen. Es sind das erste elektromechanische Wandlerelement 6 des Ultraschallwandlers 58 zu sehen, welches an die nicht gezeigte Wandleraufnahmefläche des Messrohrs im montierten Zustand angedrückt wird. Über den am anderen Ende des Ultraschallwandlers 58 angeordneten Winkelstecker 82 werden die Kabel unter die Grundplatte geführt.

Eine erste Achse 83 verbindet den ersten Bügel 56 und den ersten Spannbügel 75 in dargestellter Art und Weise. Über die zweite Achse 84 ist lediglich der Spannbügel 75 am Ultraschallwandler 58 befestigt. Dadurch ergibt sich beim Umlegen des Spannbügels 75 eine rotatorische und translatorische Bewegung des ersten Bügels 56. Dieser ist wiederum so ausgestaltet, dass er in die Zapfen des Messrohrs einhaken kann und somit den Ultraschallwandler am Messrohr feststellt.

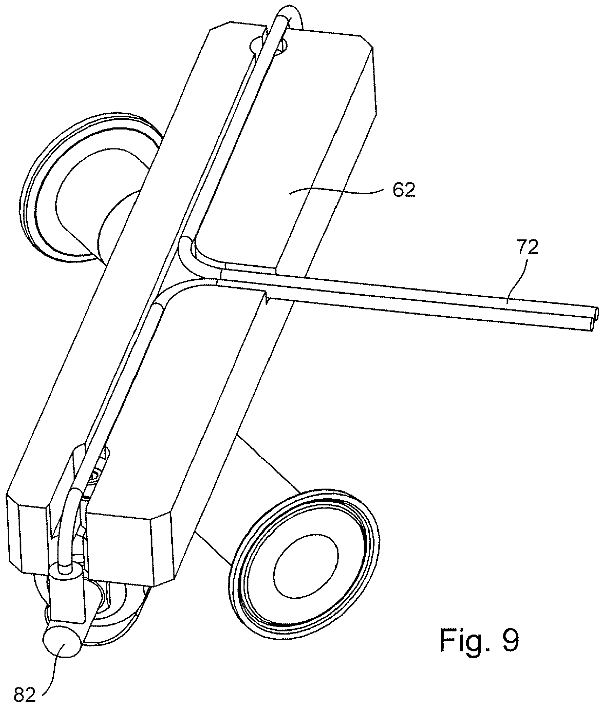

In Fig. 9 ist die vorher bereits beschriebene Grundplatte 62 in einer Draufsicht gezeichnet. Zu sehen ist ein Kabelkanal auf der Unterseite der Grundplatte 62, also auf der dem Messrohr abgewandten Seite der Grundplatte, in welchem die Kabel 72 der Ultraschallwandler in der Grundplatte 62 verdeckt und vor äußeren Einflüssen geschützt geführt werden. Die Kabel 72 werden über einen Winkelstecker 82 von den Ultraschallwandlern auf die Unterseite der Grundplatte 62 geführt.

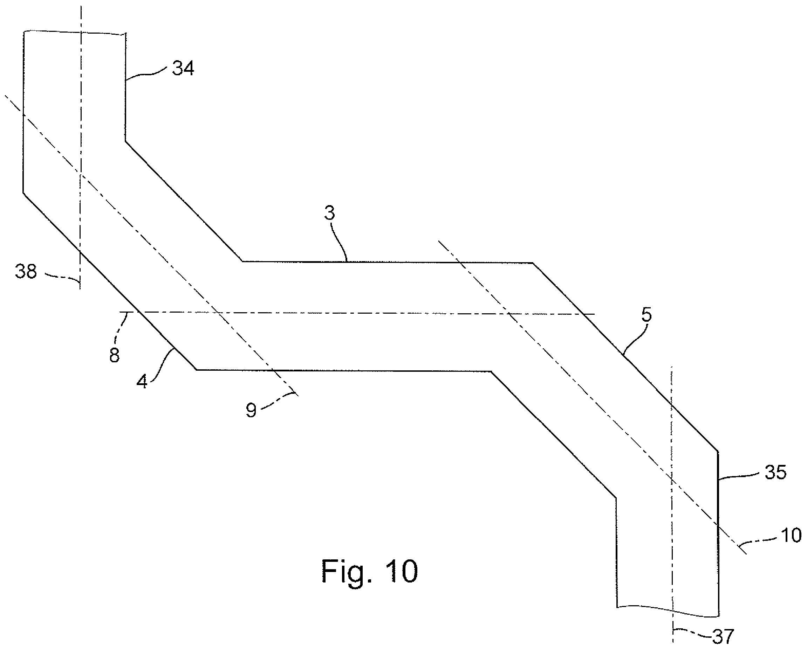

Fig. 10 repräsentiert eine Ausgestaltung eines weiteren erfindungsgemäßen Messrohrs 3. Das Messrohr 3 weist einen ersten Messrohreinlauf 4 und einen ersten Messrohrauslauf 5 auf, welche in einem Winkel von näherungsweise 45° zum Messrohr 3 am Messrohr 3 angeordnet sind, d.h. die erste Messrohreinlaufachse 9 und die erste Messrohrauslaufachse 10 weisen jeweils einen Winkel von ca. 45° zur Messrohrachse 8 auf. Erster Messrohreinlauf 4 und erster Messrohrauslauf 5 liegen dabei auf gegenüberliegenden Seiten des Messrohrs 3, d.h. die erste Messrohreinlaufachse 9 und die erste Messrohrauslaufachse 10 sind parallel zueinander und liegen im Wesentlichen in einer Raumebene.

Nun weist das Messrohr 3 eine zusätzliche Einlaufstrecke bzw. einen zusätzlichen, zweiten Messrohreinlauf 34 und eine zusätzliche Auslaufstrecke bzw. einen zusätzlichen, zweiten Messrohrauslauf 35 auf, welche ihrerseits jeweils eine Mittelachse 36, 37 aufweisen. Der zweite Messrohreinlauf 34 grenzt dabei an den ersten Messrohreinlauf 4 und der zweite Messrohrauslauf 35 grenzt an den ersten Messrohrauslauf 5. Die zweite Messrohreinlaufachse 36 weist in diesem Ausführungsbeispiel einen Winkel von im Wesentlichen 90° zur Messrohrachse auf und die zweite Messrohrauslaufachse 37 weist hier ebenfalls einen Winkel von im Wesentlichen 90° zur Messrohrachse auf. Auch die zweite Messrohreinlaufachse 36 und die zweite Messrohrauslaufachse 37 liegen in der gleichen Raumebene, wie die erste Messrohreinlaufachse 9 und die erste Messrohrauslaufachse 10 und die Messrohrachse 8. Dadurch wird die Strömung des Messmediums im Messrohr 3 in vorgegebener Art und Weise konditioniert.

**Bezugszeichenliste**

1 Messsystem
2 Messmedium
3 Messrohr
4 Erster Messrohreinlauf
5 Erster Messrohrauslauf
6 Erstes elektromechanisches Wandlerelement
7 Zweites elektromechanisches Wandlerelement
8 Messrohrachse
9 Erste Messrohreinlaufachse
10 Erste Messrohrauslaufachse
11 Verbindungslinie zwischen den Mittelpunkten der Wandlerelemente
12 Mittelpunkt des ersten elektromechanischen Wandlerelements
13 Mittelpunkt des zweiten elektromechanischen Wandlerelements
14 Ringe
15 Innendurchmesser des Messrohrs
16 Erste Schallein- und/oder Schallauskoppelfläche
17 Zweite Schallein- und/oder Schallauskoppelfläche
18 Abstand zwischen den Schallein- und/oder Schallauskoppelflächen
19 Drittes elektromechanisches Wandlerelement
20 Viertes elektromechanisches Wandlerelement
21 Mittelpunkt des dritten elektromechanischen Wandlerelements
22 Mittelpunkt des vierten elektromechanischen Wandlerelements
23 Erste Ultraschallwandleraufnahme
24 Zweite Ultraschallwandleraufnahme
25 Regel-/Auswerteeinheit
26 Verbindungslinie zwischen den Mittelpunkten der ersten und zweiten Schallein- und/oder Schallauskoppelflächen
27 Mittelpunkt der ersten Schallein- und/oder Schallauskoppelfläche
28 Mittelpunkt der zweiten Schallein- und/oder Schallauskoppelfläche
29 Erste Wandleraufnahmefläche
30 Zweite Wandleraufnahmefläche
31 Mittelpunkt der ersten Wandleraufnahmefläche
32 Mittelpunkt der zweiten Wandleraufnahmefläche
33 Verbindungslinie zwischen den Mittelpunkten der Wandleraufnahmeflächen
34 Zweiter Messrohreinlauf
35 Zweiter Messrohrauslauf
36 Zweite Messrohreinlaufachse
37 Zweite Messrohrauslaufachse
38 Messrohraußenseite
39 Erster Zapfen
40 Zweiter Zapfen
41 Dritter Zapfen
42 Vierter Zapfen
43 Stecker
44 Kupplung
45 Dritte Ultraschallwandleraufnahme
46 Vierte Ultraschallwandleraufnahme
47 Dritte Schallein- und/oder Schallauskoppelfläche
48 Vierte Schallein- und/oder Schallauskoppelfläche
49 Mittelpunkt der dritten Schallein- und/oder Schallauskoppelfläche

50 Mittelpunkt der vierten Schallein- und/oder Schallauskoppelfläche

51 Verbindungslinie zwischen den Mittelpunkten der dritten und vierten Schallein- und/oder Schallauskoppelflächen

52 Dritte Wandleraufnahmefläche

53 Vierte Wandleraufnahmefläche

54 Erster Messpfad

55 Zweiter Messpfad

56 Erster Bügel

57 Zweiter Bügel

58 Erster Ultraschallwandler

59 Zweiter Ultraschallwandler

60 Dritter Ultraschallwandler

61 Vierter Ultraschallwandler

62 Grundplatte

63 Erstes Koppelelement

64 zweites Koppelelement

65 Drittes Koppelelement

66 Viertes Koppelelement

67 Erstes Führungselement

68 Zweites Führungselement

69 Feder

70 Ultraschallwandlergehäuse

71 Sensortasse

72 Kabel

73 Erstes Zwischenrohr

74 Zweites Zwischenrohr

75 Erster Spannbügel

76 Zweiter Spannbügel

77 Führungsschienen

78 Einstellschraube

79 O-Ring-Dichtung

80 Zylinderstift

81 Distanzhülse

82 Winkelstecker

83 Erste Verschlussachse

84 Zweite Verschlussachse

**Patentansprüche**

1. Messsystem (1) zur Bestimmung und/oder Überwachung des Durchflusses eines Messmediums (2) durch ein Messrohr (3) mit einem ersten, im Wesentlichen scheibenförmigen, einen Mittelpunkt (12) aufweisenden elektromechanischen Wandlerelement (6) und zumindest einem weiteren, im Wesentlichen scheibenförmigen, einen Mittelpunkt (13) aufweisenden, zweiten elektromechanischen Wandlerelement (7) und mit einem Messrohr (2) mit einer Messrohrachse (8) und mit einem Messrohreinlauf (4) und einem Messrohrauslauf (5), welcher Messrohreinlauf (4) eine Messrohreinlaufachse (9) aufweist, welche Messrohreinlaufachse (9) einen Winkel $\alpha$ ungleich 90° zur Messrohrachse (8) aufweist und welcher Messrohrauslauf (5) eine Messrohrauslaufachse (10) aufweist, welche Messrohrauslaufachse (10) einen Winkel $\beta$ ungleich 90° zur Messrohrachse (8) aufweist, wobei sich die elektromechanischen Wandlerelemente (6, 7) im Wesentlichen planparallel gegenüberstehen und jeweils mit dem Messrohr (3) akustisch koppelbar sind,
**dadurch gekennzeichnet,**
**dass** eine Verbindungslinie (11) zwischen den Mittelpunkten (12, 13) des ersten und zweiten elektromechanischen Wandlerelements (6, 7) in einem Winkel $\gamma$ zur Messrohrachse (8) steht und auf der Seite der Messrohrachse (8) verläuft, auf welcher sich der Messrohrauslauf (5) befindet, wobei ein Messpfad des Messsystems entlang der Verbindungslinie verläuft.

2. Messsystem (1) nach Anspruch 1,
**dadurch gekennzeichnet,**
**dass** der Winkel $\gamma$ näherungsweise 0° bzw. 180° beträgt.

3. Messsystem (1) nach Anspruch 1 oder 2,
**dadurch gekennzeichnet,**
**dass** zumindest die größte Ausdehnung des scheibenförmigen, ersten elektromechanischen Wandlerelements (6) höchstens die Hälfte des Innendurchmessers (15) des Messrohrs (3) beträgt.

4. Messsystem (1) nach einem der Ansprüche 1 bis 3,
**dadurch gekennzeichnet,**
**dass** die Messrohrachse (8), die Messrohreinlaufachse (9) und die Messrohrauslaufachse (10) im Wesentlichen in einer Raumebene liegen.

5. Messsystem (1) nach einem der Ansprüche 1 bis 4,
**dadurch gekennzeichnet,**
**dass** der Messrohreinlauf (4) und der Messrohrauslauf (5) auf sich gegenüberliegenden Seiten des Messrohrs (3) angeordnet sind.

6. Messsystem (1) nach einem der Ansprüche 1 bis 5,
**dadurch gekennzeichnet,**
**dass** der Winkel $\alpha$ näherungsweise 45° beträgt.

7. Messsystem (1) nach einem der Ansprüche 1 bis 6,
**dadurch gekennzeichnet,**
**dass** der Messrohreinlauf (4) und/oder der Messrohrauslauf (5) einen näherungsweise gleichen Querschnitt wie das Messrohr (3) aufweisen.

8. Messsystem (1) nach einem der Ansprüche 1 bis 7,
**dadurch gekennzeichnet,**
**dass** das Messrohr (3) querschnittsverengende Ringe (14) aufweist.

9. Messsystem (1) nach einem der Ansprüche 1 bis 8,
**dadurch gekennzeichnet,**
**dass** das Messsystem (1) ein drittes scheibenförmiges elektromechanisches Wandlerelement (19) und ein viertes scheibenförmiges elektromechanisches Wandlerelement (20) aufweist, wobei sich das dritte und vierte elektromechanische Wandlerelement (19, 20) im Wesentlichen planparallel gegenüberstehen und wobei die Verbindungslinie zwischen den Mittelpunkten (21, 22) des dritten und vierten elektromechanischen Wandlerelements (19, 20) in einem Winkel δ zur Messrohrachse (8) steht und auf der der die Verbindungslinie (11) zwischen den Mittelpunkten (12, 13) des ersten und zweiten elektromechanischen Wandlerelements (6, 7) gegenüberliegenden Seite der Messrohrachse (8) verläuft.

10. Messsystem (1) nach Anspruch 9,
**dadurch gekennzeichnet,**
**dass** der Winkel δ näherungsweise gleich groß wie der Winkel γ ist.

11. Messsystem (1) nach Anspruch 9 oder 10,
**dadurch gekennzeichnet,**
**dass** eine Regel-/Auswerteeinheit (25) vorgesehen ist, die mindestens anhand von Laufzeitdifferenzen von Ultraschallsignalen entlang eines ersten Messpfads (54) zwischen dem ersten und dem zweiten elektromechanischen Wandlerelement (6, 7) und mindestens anhand von Laufzeitdifferenzen von Ultraschallsignalen entlang eines zweiten Messpfads (55) zwischen dem dritten und dem vierten elektromechanischen Wandlerelement (19, 20) den Durchfluss des Messmediums (2) durch das Messrohr (3) bestimmt und/oder überwacht.

12. Verfahren zur Bestimmung und/oder Überwachung des Durchflusses eines Messmediums (2) durch ein Messrohr (3), mittels eines Messsystems nach einem der Ansprüche 9 bis 11,
**dadurch gekennzeichnet,**
**dass** der Wert für den Durchfluss anhand eines Wertes für die Reynoldssche Zahl korrigiert wird.

13. Verfahren nach Anspruch 12
**dadurch gekennzeichnet,**
**dass** die Reynoldssche Zahl des strömenden Messmediums durchgängig und ausschließlich entweder anhand von vorbestimmten Konstanten sowie von Verhältnissen der Geschwindigkeiten entlang mindestens zweier voneinander verschiedener Messpfade (54, 55) oder anhand von empirisch ermittelten Koeffizienten sowie von Differenzen der Geschwindigkeiten entlang mindestens zweier voneinander verschiedener Messpfade (54, 55) bestimmt wird und die Korrektur des Wertes für den Durchfluss mit Hilfe des durchgängig bestimmten Wertes für die Reynoldssche Zahl erfolgt.

14. Verfahren nach einem der Ansprüche 12 bis 13,
**dadurch gekennzeichnet,**

**dass** die Reynoldssche Zahl mittels der Funktion f und den empirisch bestimmten Faktoren a und b wie folgt bestimmt wird: Re = $f(v1/v2) = \ln((1-v1/v2*a)/b$, wobei v1 die Strömungsgeschwindigkeit des Messmediums entlang des schnelleren Messpfads ist und v1 die Strömungsgeschwindigkeit des Messmediums entlang des langsameren Messpfads ist.

15. Verfahren nach Anspruch 12 oder 13,
**dadurch gekennzeichnet,**
**dass** die Reynoldssche Zahl Re in Abhängigkeit von der dynamischen Viskosität v bestimmt wird.

**Claims**

1. Measuring system (1) designed to determine and/or monitor the flow of a medium under measurement (2) through a measuring tube (3) with a first essentially discoidal electromechanical transducer element (6), which has a central point (12), and at least an additional second essentially discoidal electromechanical transducer (7), which has a central point (13), and with a measuring tube (2) with a measuring tube axis (8) and with a measuring tube inlet (4) and a measuring tube outlet (5), wherein said measuring tube inlet (4) has a measuring tube inlet axis (9), said measuring tube inlet axis (9) having an angle σ not equal to 90° in relation to the measuring tube axis (8), and wherein said measuring tube outlet (5) has a measuring tube outlet axis (10), said measuring tube outlet axis (10) having an angle β not equal to 90° in relation to the measuring tube axis (8), wherein the electromechanical transducer elements (6, 7) are essentially opposite one another in a plane-parallel manner, and can each be coupled acoustically with the measuring tube (3),
**characterized in that**
a connecting line (11) between the center points (12, 13) of the first and second electromechanical transducer element (6, 7) is at an angle y in relation to the measuring tube axis (8) and extends along the side of the measuring tube axis (8) on which the measuring tube outlet (5) is located,
wherein a measuring path of the measuring system extends along the connecting line.

2. Measuring system (1) as claimed in Claim 1,
**characterized in that**
the angle γ is approximately 0° or 180°.

3. Measuring system (1) as claimed in Claim 1 or 2,
**characterized in that**
at least the maximum extension of the discoidal first electromechanical transducer element (6) is, at maximum, half the inner diameter (15) of the measuring tube (3).

**4.** Measuring system (1) as claimed in one of the Claims 1 to 3,
**characterized in that**
the measuring tube axis (8), the measuring tube inlet axis (9) and the measuring tube outlet axis (10) are essentially on a spatial plane.

**5.** Measuring system (1) as claimed in one of the Claims 1 to 4,
**characterized in that**
the measuring tube inlet (4) and the measuring tube outlet (5) are arranged on opposite sides of the measuring tube (3)

**6.** Measuring system (1) as claimed in one of the Claims 1 to 5,
**characterized in that**
the angle σ is approximately 45°.

**7.** Measuring system (1) as claimed in one of the Claims 1 to 6,
**characterized in that**
the measuring tube inlet (4) and/or the measuring tube outlet (5) have a cross-section that is essentially identical to that of the measuring tube (3).

**8.** Measuring system (1) as claimed in one of the Claims 1 to 7,
**characterized in that**
the measuring tube (3) has rings (14) constricting the cross-section.

**9.** Measuring system (1) as claimed in one of the Claims 1 to 8,
**characterized in that**
the measuring system (1) has a third discoidal electromechanical transducer element (19) and a fourth discoidal electromechanical transducer element (20), wherein the third and fourth electromechanical transducer element (19, 20) are essentially opposite one another in a plane parallel manner and wherein the connecting line between the center points (21, 22) of the third and fourth electromechanical transducer element (19, 20) is at an angle δ in relation to the measuring tube axis (8) and extends along the side of the measuring tube axis (8) situated opposite the connecting line (11) between the center points (12, 13) of the first and second electromechanical transducer element (6, 7).

**10.** Measuring system (1) as claimed in Claim 9,
**characterized in that**
the angle δ is approximately the same size as angle γ.

**11.** Measuring system (1) as claimed in Claim 9 or 10,
**characterized in that**
a control/evaluation unit (25) is provided, which determines and/or monitors the flow of the medium (2) through the measuring tube (3) at least using the differences in the time-of-flight of ultrasonic signals along a first measuring path (54) between the first and the second electromechanical transducer element (6, 7) least using the differences in the time-of-flight of ultrasonic signals along a second measuring path (55) between the third and the fourth electromechanical transducer element (19, 20).

**12.** Procedure to determine and/or monitor the flow of a medium (2) through a measuring tube (3) using a measuring system as claimed in one of the Claims 9 to 11,
**characterized in that**
the value for the flow is corrected using a value for the Reynolds number.

**13.** Procedure as claimed in Claim 12,
**characterized in that**
the Reynolds number of the flowing medium is determined consistently and exclusively either using predefined constants and ratios of velocities along at least two measuring paths (54, 55) that are different from one another or using empirically determined coefficients and differences in velocity along at least two measuring paths (54, 55) that are different from one another, and **in that** the value for the flow is corrected using the value for the Reynolds number which is determined consistently.

**14.** Procedure as claimed in one of the Claims 12 to 13,
**characterized in that**
the Reynolds number is determined using the function f and the empirically determined factors a and b as follows: Re = f(v1/v2)= ln((1-v1/v2*a)/b), where v1 is the flow velocity of the medium along the faster measuring path and v2 is the flow velocity of the medium along the slower measuring path.

**15.** Procedure as claimed in Claim 12 or 13,
**characterized in that**
the Reynolds number Re is determined depending on the dynamic viscosity v.

**Revendications**

**1.** Système de mesure (1) destiné à la détermination et/ou la surveillance du débit d'un produit mesuré (2) à travers un tube de mesure (3) avec un premier élément convertisseur électromécanique (6), pour l'essentiel en forme de disque, présentant un centre (12), et au moins un deuxième élément convertisseur électromécanique (7), pour l'essentiel en forme de disque, présentant un centre (13), et avec un tube de mesure (2) avec un axe de tube de mesure (8) et avec une entrée de tube de mesure (4) et une sortie de tube de mesure (5), laquelle entrée de tube de mesure (4) présente un axe d'entrée de tube de mesure (9), lequel axe d'entrée de tube de mesure (9) présente un angle σ différent de 90° par rapport à l'axe de tube de mesure (8), et laquelle sortie de tube de mesure (5) présente un axe de sortie de tube de mesure (10), lequel axe de sortie de tube de mesure (10) présente un angle β différent de 90° par rapport à l'axe de tube de mesure (8), les éléments convertisseurs électromécaniques (6, 7) étant disposés l'un en face de l'autre de manière plane et parallèle, et pouvant être couplés de manière acoustique avec le tube de mesure (3),

**caractérisé**

**en ce qu'**une ligne de liaison (11) entre les centres (12, 13) du premier et du deuxième élément convertisseur électromécanique (6, 7) se trouve dans un angle y par rapport à l'axe de tube de mesure (8) et s'étend sur le côté de l'axe de tube de mesure (8) sur lequel se trouve la sortie de tube de mesure (5), une voie de mesure du système de mesure s'étendant le long de la ligne de liaison.

2. Système de mesure (1) selon la revendication 1,
**caractérisé**
**en ce que** l'angle γ est approximativement égal à 0° ou 180°.

3. Système de mesure (1) selon la revendication 1 ou 2,
**caractérisé**
**en ce qu'**au moins la dilatation la plus grande du premier élément convertisseur électromécanique en forme de disque (6) s'élève au maximum à la moitié du diamètre intérieur (15) du tube de mesure (3).

4. Système de mesure (1) selon l'une des revendications 1 à 3,
**caractérisé**
**en ce que** l'axe de tube de mesure (8), l'axe d'entrée de tube de mesure (9) et l'axe de sortie de tube de mesure (10) se trouvent pour l'essentiel dans un plan spatial.

5. Système de mesure (1) selon l'une des revendications 1 à 4,
**caractérisé**
**en ce que** l'entrée de tube de mesure (4) et la sortie de tube de mesure (5) sont disposées sur des côtés opposés du tube de mesure (3)

6. Système de mesure (1) selon l'une des revendications 1 à 5,
**caractérisé**
**en ce que** l'angle σ est approximativement égal à 45°.

7. Système de mesure (1) selon l'une des revendications 1 à 6,

**caractérisé**
**en ce que** l'entrée de tube de mesure (4) et/ou la sortie de tube de mesure (5) présentent une section approximativement identique à celle du tube de mesure (3).

8. Système de mesure (1) selon l'une des revendications 1 à 7,
**caractérisé**
**en ce que** le tube de mesure (3) comporte des anneaux réducteurs de section (14).

9. Système de mesure (1) selon l'une des revendications 1 à 8,
**caractérisé**
**en ce que** le système de mesure (1) présente un troisième élément convertisseur en forme de disque (19) et un quatrième élément convertisseur en forme de disque (20), le troisième et le quatrième élément convertisseur électromécanique (19, 20) étant pour l'essentiel disposés l'un en face de l'autre de manière plane et parallèle, et la ligne de liaison entre les centres (21, 22) du troisième et du quatrième élément convertisseur électromécanique (19, 20) se trouvant à un angle δ par rapport à l'axe de tube de mesure (8) et s'étendant sur le côté de l'axe de tube de mesure (8) situé à l'opposé de la ligne de liaison (11), entre les centres (12, 13) du premier et du deuxième élément convertisseur électromécanique (6, 7).

10. Système de mesure (1) selon la revendication 9,
**caractérisé**
**en ce que** l'angle δ est approximativement égal à l'angle y.

11. Système de mesure (1) selon la revendication 9 ou 10,
**caractérisé**
**en ce qu'**est prévue une unité de régulation / d'exploitation (25), qui détermine et/ou surveille - au moins au moyen de différences de temps de propagation de signaux ultrasonores le long d'une première voie de mesure (54) entre le premier et le deuxième élément convertisseur électromécanique (6, 7) et au moins au moyen de différences de temps de propagation de signaux ultrasonores le long d'une deuxième voie de mesure (55) entre le troisième et le quatrième élément convertisseur électromécanique (19, 20) - le débit du produit mesuré (2) à travers le tube de mesure (3).

12. Procédé destiné à la détermination et/ou la surveillance du débit d'un produit mesuré (2) à travers un tube de mesure (3) au moyen d'un système de mesure selon l'une des revendications 9 à 11,
**caractérisé**
**en ce que** la valeur pour le débit est corrigée au moyen d'une valeur pour le nombre de Reynolds.

13. Procédé selon la revendication 12, **caractérisé en ce que** le nombre de Reynolds du produit mesuré en écoulement est déterminé en continu et exclusivement, soit au moyen de constantes prédéfinies ainsi que de relations de vitesses le long d'au moins deux voies de mesure (54, 55) différentes l'une de l'autre, soit au moyen de coefficients déterminés de manière empirique ainsi que de différences de vitesses le long d'au moins deux voies de mesure (54, 55) différentes l'une de l'autre, et **en ce que** la correction de la valeur pour le débit est effectuée à l'aide de la valeur déterminée en continu pour le nombre de Reynolds.

14. Procédé selon l'une des revendications 12 à 13, **caractérisé en ce que** le nombre de Reynolds est déterminé au moyen de la fonction f et des facteurs a et b déterminés de manière empirique, comme suit : Re = f(v1/v2)= ln((1-v1/v2*a)/b, où v1 est la vitesse d'écoulement du produit mesuré le long de la voie de mesure plus rapide et v2 la vitesse d'écoulement du produit mesuré le long de la voie de mesure plus lente.

15. Procédé selon la revendication 12 ou 13, **caractérisé en ce que** le nombre de Reynolds Re est déterminé en fonction de la viscosité dynamique v.

EP 2 370 793 B1

Fig. 1

Fig. 2

EP 2 370 793 B1

Fig. 3

EP 2 370 793 B1

Fig. 4

Fig. 5

Fig. 6a

Fig. 6b

Fig. 7

Fig. 8a

Fig. 8b

62

72

82

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 686255 B1
- US 4484478 A
- US 4598593 A
- US 5052230 A
- US 5179862 A
- US 5463906 A
- US 5717145 A
- EP 1760436 A2
- US 20070227263 A1
- WO 2008101662 A2